# EUROPÄISCHE PATENTANMELDUNG

(11) **EP 1 836 894 A1**
(43) Veröffentlichungstag der Anmeldung: **26.09.2007**
(21) Anmeldenummer: 06006195.9
(22) Anmeldetag: 25.03.2006
(51) Int. Cl.: A01N 47/36, A01N 25/32, A01N 25/14, A01P 13/00

(54) **Neue Sulfonamid-haltige feste Formulungen**

(71) Anmelder: Bayer CropScience GmbH, 65929 Frankfurt/Main (DE)
(72) Erfinder: Die Erfindernennung liegt noch nicht vor

(57) **Zusammenfassung**

Die vorliegende Erfindung betrifft feste, wasserdispergierbare Formulierung enthaltend ein oder mehrere herbizide Wirkstoffe aus der Gruppe der Sulfonamide der allgemeinen Formel (I) und deren Salze, ein oder mehrere Safener, ein oder mehrere Lösungsmittel, ein oder mehrere Trägermaterialien, ausgewählt aus Trägerstoffen mit niedriger und/oder hoher Saugfähigkeit, ein oder mehrere übliche Hilfs- und Zusatzstoffe, ausgewählt aus Emulgatoren, Antischaummittel, Netzmittel, und Dispergatoren; wobei die Safener und Lösungsmittel in einem besonderen Verhältnis stehen, wie auch diese beiden Komponenten zusammengenommen in einem besonderen Verhältnis stehen zu den verwendeten Trägerstoffen mit hoher Saugfähigkeit.

Die erfindungsgemäßen Formulierungen eignen sich für den Bereich des Pflanzenschutzes.

## Beschreibung

Die vorliegende Erfindung betrifft das Gebiet der Pflanzenschutzmittelformulierungen. Insbesondere betrifft die Erfindung feste Herbizid-Formulierungen, welche herbizide Wirkstoffe aus der Gruppe der Sulfonamide und deren Salzen, insbesondere Phenylsulfonamide, wie Phenylsulfonylaminocarbonyltriazolinone oder Phenylsulfonylharnstoffe und Heteroarylsulfonamide sowie deren Salze, enthalten.

Wirkstoffe für den Pflanzenschutz werden im allgemeinen nicht in ihrer reinen Form eingesetzt. In Abhängigkeit von dem Anwendungsgebiet und der Anwendungsart, sowie von physikalischen, chemischen und biologischen Parametern wird der Wirkstoff in Mischung mit üblichen Hilfs- und Zusatzstoffen als Wirkstoffformulierung eingesetzt. Aber auch die Wirkstoffformulierung von Kombinationen mit weiteren Wirkstoffen zur Erweiterung des Wirkungsspektrums und/oder zum Schutz der Kulturpflanzen (z.B. durch Safener, Antidote) ist ein wichtiges Arbeitsgebiet der Formulierungstechnologie, da hier Wirkstoffe mit zum Teil recht unterschiedlichen physikalischen, chemischen und biologischen Parametern adäquat gemeinsam formuliert werden müssen.

So sollten Formulierungen von Wirkstoffen, allein oder in Kombinationen mehrerer Wirkstoffe, für den Pflanzenschutz im allgemeinen eine hohe chemische und physikalische Stabilität, eine gute Applizierbarkeit und Anwenderfreundlichkeit und eine breite biologische Wirkung mit hoher Selektivität im Hinblick auf die verwendeten Wirkstoffe aufweisen, neben einer technisch guten Formulierbarkeit im Herstellungsprozess.

Feste Formulierungen von Wirkstoffen aus der Gruppe der Sulfonylharnstoffe sind an sich bekannt, etwa aus WO-A-97/10714.

Allerdings liegen bisher im Hinblick auf genügend ausreichende Applizierbarkeit keine zufrieden stellenden Wirkstoff-haltigen festen Formulierungen von Kombinationen der Sulfonamide mit weiteren Wirkstoffen, wie beispielsweise niedrigschmelzenden Safenern, vor. Beobachtet wird in diesem Zusammenhang meist die schlechte Dispergierbarkeit so zusammengesetzter fester Formulierung beim Erstellen wässriger Spritzbrühen, mit der Folge von beispielsweise Düsenverstopfungen bei und Wirkungsverlusten nach der Applikation.

Daneben weisen herbizide Wirkstoffe aus der Gruppe der Sulfonamide im allgemeinen ein hohes Maß an chemischer Reaktivität auf und neigen zum chemischen Abbau, z.B. durch Hydrolyse, welches im Hinblick auf eine ausreichende Lagerstabilität in den Formulierungen kritisch beurteilt werden muss.

Eine Stabilisierung von in festen Formulierungen enthaltenen Sulfonylharnstoffen wird z.B. in JP-A-62-084004 beschrieben, indem Calciumcarbonat und Na-Tripolyphosphat als Stabilisatoren zugesetzt werden. Daneben können aber auch die Formulierungen selbst, bedingt durch die hierin enthaltenen Hilfs- und Zusatzstoffe, die Stabilität der Wirkstoffe beeinflussen: WO-A-98/34482 beschreibt Versuchsergebnisse mit den Phenylsulfonylharnstoffen Tritosulfuron und Metsulfuron, wonach Zusatzstoffe (Adjuvantien) aus der Gruppe der Fettalkoholethoxylate und ethoxylierten Fettamine eine geringere Lagerstabilität bewirken als Adjuvantien aus der Gruppe der Natrium-Salze der aliphatischen Sulfonsäuren, wie Na-Alkansulfonate und Na-alpha-Olefinsulfonate. EP-A-764404 beschreibt eine Stabilisierung des Heteroarylsulfonylharnstoffs Flazasulfuron durch Verwendung von Na-Dioctylsulfosuccinat.

Entsprechende Stabilitätsuntersuchungen mit Wirkstoffen aus der Gruppe der Sulfonamide der allgemeinen Formel (1) und deren Salze im Kombination mit Safenern und Lösemitteln formuliert als Granulate sind nicht bekannt.

Die Aufgabe der vorliegenden Erfindung bestand darin, eine verbesserte Pflanzenschutzmittelhaltige feste Formulierung zur Verfügung zu stellen, welche sich aus Kombinationen von Wirkstoffen aus der Gruppe der Sulfonamide und Wirkstoffen aus der Gruppe der Safener zusammensetzt und welche eine gute Applizierbarkeit aufweist bei unverändert hoher biologischer Effektivität und Kulturpflanzenverträglichkeit der Wirkstoffe. Daneben sollte eine hohe physikalische und chemische Lagerstabilität dieser Wirkstoff-Kombinationen in der Formulierung ermöglicht werden, neben guter Formulierbarkeit im Herstellungsprozess der Formulierung sowie späterer Anwenderfreundlichkeit.

Diese Aufgabe wird gelöst durch die feste, wasserdispergierbare Formulierung der vorliegenden Erfindung.

Die vorliegende Erfindung betrifft somit eine feste, wasserdispergierbare Formulierung enthaltend:
(a) ein oder mehrere Wirkstoffe aus der Gruppe der Sulfonamide der allgemeinen Formel (1) und deren Salze;
(b) ein oder mehrere Safener;
(c) ein oder mehrere Lösungsmittel,
(d) ein oder mehrere Trägermaterialien, ausgewählt aus einer oder mehreren der Gruppen:
   (d-1) Trägerstoffe mit niedriger Saugfähigkeit,
   (d-2) Trägerstoffe mit hoher Saugfähigkeit;
(e) ein oder mehrere übliche Hilfs- und Zusatzstoffe, ausgewählt aus einer oder mehreren der Gruppen
   (e-1) Emulgatoren,
   (e-2) Antischaummittel,
   (e-3) Netzmittel,
   (e-4) Dispergatoren;
   wobei
   die Komponente (b) zur Komponente (c) in folgendem Verhältnis stehen: (b) : (c) im allgemeinen 0,3 bis 2,0 : 1, bevorzugt 0,4 bis 1,5 : 1, besonders bevorzugt 0,5 bis 1,0 : 1; und gleichzeitig die Summe der Komponenten (b) und (c) zur Komponente (d-2) in folgendem Verhältnis stehen: [(b) + (c)] : (d-2) im allgemeinen 1,7 bis 3,9 : 1, bevorzugt 1,85 bis 3,5 : 1, besonders bevorzugt 2,0 bis 3,0 : 1 .
   Darüber hinaus kann die erfindungsgemäße feste, wasserdispergierbare Formulierung als weitere Komponenten gegebenenfalls noch enthalten:
(f) ein oder mehrere von den Komponenten (a) und (b) verschiedene agrochemische Wirkstoffe.
(g) ein oder mehrere von der Komponenten (e) verschiedene weitere übliche Hilfs-und Zusatzstoffe.

Die betreffenden Sulfonamide (Komponente a) werden gekennzeichnet durch die allgemeine Formel (I):

R^{α}-(A)ₘ-SO₂-NR^{β}-CO-(NR^{γ})ₙ - R^{δ} (1)

worin
- R^{α}: ein Heteroarylrest ist, der unsubstituiert oder substituiert ist, und wobei der Phenylrest inklusive Substituenten 1-30 C-Atome, vorzugsweise 1-20 C-Atome aufweist,
oder
ein Phenylrest ist, der unsubstituiert oder substituiert ist, und wobei der Phenylrest inklusive Substituenten 6-30 C-Atome, vorzugsweise 6-20 C-Atome aufweist,
- R^{β}: ein Wasserstoffatom oder ein Kohlenwasserstoffrest ist, der unsubstituiert oder substituiert ist und inklusive Substituenten 1-10 C-Atome aufweist, z.B. unsubstituiertes oder substituiertes C₁-C₆-Alkyl, vorzugsweise ein Wasserstoffatom oder Methyl,
- R^{γ}: ein Wasserstoffatom oder ein Kohlenwasserstoffrest ist, der unsubstituiert oder substituiert ist und inklusive Substituenten 1-10 C-Atome aufweist, z.B. unsubstituiertes oder substituiertes C₁-C₆-Alkyl, vorzugsweise ein Wasserstoffatom oder Methyl,
- A: gleich CH₂, O oder NH, vorzugsweise O, ist,
- m: gleich Null oder 1,
- n: gleich Null oder 1, vorzugsweise gleich 1, und
- R^{δ}: ein heterocyclischer Rest wie ein Pyridylrest oder ein Triazinylrest ist.

Die oben genannte Formel (I) wird durch die folgenden Formeln (I)-1 bis (I)-6 präzisiert, wobei Vertreter aus der Gruppe der Phenylsulfonylharnstoffe, wie lodosulfuron-methyl und Mesosulfuron-methyl, und aus der Gruppe der sonstigen Sulfonamide, wie Amidosulfuron, nicht umfasst sind.

Als Sulfonamide der allgemeinen Formel (I) (Komponente a) bevorzugt sind Phenylsulfonamide, wie Phenylsulfonylharnstoffe und Heteroarylsulfonamide sowie deren Salze. Als Phenylsulfonamide kommen bevorzugt Verbindungen aus der Gruppe der Phenylsulfonylharnstoffe in Frage. Unter dem Begriff Phenylsulfonylharnstoffe werden auch solche Sulfonylharnstoffe verstanden, bei denen die Phenylgruppe über einen Spacer wie CH₂, O oder NH an die Sulfongruppe (SO₂) gebunden ist.

Als Phenylsulfonamide kommen beispielsweise Phenylsulfonamide der allgemeinen Formel (I)-1 und/oder deren Salze in Frage,

R^{α}-(A)ₘ-SO₂-NR^{β}-CO-(NR^{γ})ₙ - R^{δ} (I)-1

worin
- R^{α}: ein Phenylrest ist, der unsubstituiert oder substituiert ist, und wobei der Phenylrest inklusive Substituenten 6-30 C-Atome, vorzugsweise 6-20 C-Atome aufweist,
- R^{β}: ein Wasserstoffatom oder ein Kohlenwasserstoffrest ist, der unsubstituiert oder substituiert ist und inklusive Substituenten 1-10 C-Atome aufweist, z.B. unsubstituiertes oder substituiertes C₁-C₆-Alkyl, vorzugsweise ein Wasserstoffatom oder Methyl,
- R^{γ}: ein Wasserstoffatom oder ein Kohlenwasserstoffrest ist, der unsubstituiert oder substituiert ist und inklusive Substituenten 1-10 C-Atome aufweist, z.B. unsubstituiertes oder substituiertes C₁-C₆-Alkyl, vorzugsweise ein Wasserstoffatom oder Methyl,

- A: gleich CH₂, O oder NH, vorzugsweise O, ist,
- m: gleich Null oder 1,
- n: gleich Null oder 1, vorzugsweise gleich 1, und
- R^{δ}: ein heterocyclischer Rest wie ein Pyridylrest oder ein Triazinylrest ist.

Bevorzugte Phenylsulfonamide sind Phenylsulfonylharnstoffe, beispielsweise Phenylsulfonylharnstoffe der allgemeinen Formel (I)-2 und/oder deren Salze,

R^{α}-(A)ₘ-SO₂-NR^{β}-CO-NR^{γ} - R^{δ} (I)-2

worin
- R^{α}: ein Phenylrest ist, der unsubstituiert oder substituiert ist, und wobei der Phenylrest inklusive Substituenten 6-30 C-Atome, vorzugsweise 6-20 C-Atome aufweist,
- R^{β}: ein Wasserstoffatom oder ein Kohlenwasserstoffrest ist, der unsubstituiert oder substituiert ist und inklusive Substituenten 1-10 C-Atome aufweist, z.B. unsubstituiertes oder substituiertes C₁-C₆-Alkyl, vorzugsweise ein Wasserstoffatom oder Methyl,
- R^{γ}: ein Wasserstoffatom oder ein Kohlenwasserstoffrest ist, der unsubstituiert oder substituiert ist und inklusive Substituenten 1-10 C-Atome aufweist, z.B. unsubstituiertes oder substituiertes C₁-C₆-Alkyl, vorzugsweise ein Wasserstoffatom oder Methyl,
- A: gleich CH₂, O oder NH, vorzugsweise O, ist,
- m: gleich Null oder 1, und
- R^{δ}: ein heterocyclischer Rest wie ein Pyridylrest oder ein Triazinylrest ist.

Bevorzugt sind Phenylsulfonylharnstoffe der Formel (I)-3 und/oder deren Salze, 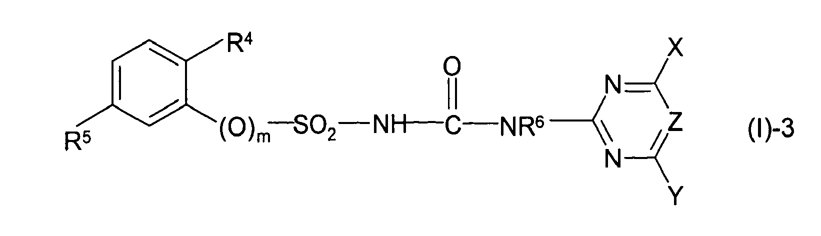 worin
- R⁴: C₁-C₄-Alkoxy, vorzugsweise C₂-C₄-Alkoxy, oder CO-R^{a} ist, worin R^{a} gleich OH, C₁-C₄-Alkoxy oder NR^{b}R^{c} ist, worin R^{b} und R^{c} unabhängig voneinander gleich oder verschieden H oder C₁-C₄-Alkyl sind,
- R⁵: H, Halogen (F, Cl, Br) oder -NR^{d}R^{e} ist, R^{d} gleich H oder C₁-C₄-Alkyl ist und R^{e} ein Acylrest wie Formyl oder C₁-C₄-Alkyl-Sulfonyl ist,
- R⁶: H oder C₁-C₄-Alkyl ist,
- m: gleich Null oder 1 ist,
- X und Y: unabhängig voneinander gleich oder verschieden Halogen oder NR'R", worin R' und R" gleich oder verschieden H oder C₁-C₄-Alkyl sind, oder C₁-C₆-Alkyl, C₁-C₆-Alkoxy, C₁-C₆-Alkylthio, C₃-C₆-Cycloalkyl, C₂-C₆-Alkenyl, C₂-C₆-Alkynyl, C₃-C₆-Alkenyloxy oder C₃-C₆-Alkynyloxy sind, wobei jeder der acht letztgenannten Reste unsubstituiert oder durch einen oder mehrere Reste aus der Gruppe Halogen, C₁-C₄-Alkoxy und C₁-C₄-Alkylthio substituiert ist, vorzugsweise C₁-C₄-Alkyl oder C₁-C₄-Alkoxy, und
- Z: gleich CH oder N ist.

Besonders bevorzugt sind Phenylsulfonylharnstoffe der allgemeinen Formel (I)-3 und/oder deren Salze, worin
a) R⁴ gleich CO-(C₁-C₄-Alkoxy) ist, R⁵ gleich Halogen (F, Cl, Br) ist, oder R⁵ gleich -NHR^{e} ist, worin R^{e} ein Acylrest, vorzugsweise C₁-C₄-Alkyl-Sulfonyl ist, und m gleich Null ist,
b) R⁴ gleich CO-N(C₁-C₄-Alkyl)₂, R⁵ gleich NHR^{e} ist, worin R^{e} ein Acylrest, vorzugsweise Formyl ist, und m gleich Null ist, oder
c) R⁴ gleich C₂-C₄-Alkoxy, R⁵ gleich H und m gleich 1 ist.

Typische Phenylsulfonylharnstoffe sind unter anderem die nachfolgend aufgeführten Verbindungen und deren Salze wie die Natriumsalze: Bensulfuron-methyl, Chlorimuron-ethyl, Chlorsulfuron, Cinosulfuron, Cyclosulfamuron, Ethametsulfuron-methyl, Ethoxysulfuron und dessen Natriumsalz, Metsulfuron-methyl, Oxasulfuron, Primisulfuron-methyl, Prosulfuron, Sulfometuron-methyl, Triasulfuron, Tribenuron-methyl, Triflusulfuron-methyl, Tritosulfuron und Foramsulfuron und dessen Natriumsalz (Agrow Nr. 338, 15. Oktober 1999, Seite 26 (PJB Publications Ltd. 1999)).

Besonders bevorzugte Phenylsulfonamide sind: Foramsulfuron und dessen Natriumsalz, Methyl-4-[(4,5-dihydro-3-methoxy-4-methyl-5-oxo-1 H-1,2,4-triazol-1 - yl)carboxamidosulfonyl]-5-metylthiophen-3-carboxylat und dessen Natriumsalz, und Ethoxysulfuron und dessen Natriumsalz, Metsulfuron-methyl und dessen Natriumsalz, Tribenuron-methyl und dessen Natriumsalz, Chlorsulfuron und dessen Natriumsalz.

Die vorstehend aufgeführten Wirkstoffe sind z.B. bekannt aus "The Pesticide Manual", 12. Auflage, The British Crop Protection Council (2000), oder den nach den einzelnen Wirkstoffen aufgeführten Literaturstellen.

Als Heteroarylsulfonamide kommen beispielsweise Verbindungen aus der Gruppe der Heteroarylsulfonylharnstoffe in Frage. Unter dem Begriff Heteroarylsulfonylharnstoffe werden auch solche Sulfonylharnstoffe verstanden, bei denen die Heteroarylgruppe über einen Spacer wie CH₂, O oder NH an die Sulfongruppe (SO₂ gebunden ist.

Als Heteroarylsulfonamide kommen beispielsweise Sulfonamide der allgemeinen Formel (I)-4 und/oder deren Salze in Frage,

R^{α}-(A')ₘ-SO₂-NR^{β'}-CO-(NR^{γ'})_{n'}- R^{δ'} (I)-4

worin
- R^{α}': ein Heteroarylrest ist, der unsubstituiert oder substituiert ist, und wobei der Heteroarylrest inklusive Substituenten 1-30 C-Atome, vorzugsweise 1-20 C-Atome aufweist,
- R^{β}': ein Wasserstoffatom oder ein Kohlenwasserstoffrest ist, der unsubstituiert oder substituiert ist und inklusive Substituenten 1-10 C-Atome aufweist, z.B. unsubstituiertes oder substituiertes C₁-C₆-Alkyl, vorzugsweise ein Wasserstoffatom oder Methyl,
- R^{γ'}: ein Wasserstoffatom oder ein Kohlenwasserstoffrest ist, der unsubstituiert oder substituiert ist und inklusive Substituenten 1-10 C-Atome aufweist, z.B. unsubstituiertes oder substituiertes C₁-C₆-Alkyl, vorzugsweise ein Wasserstoffatom oder Methyl,
- A': gleich CH₂, O oder NH, vorzugsweise O, ist,
- m': gleich Null oder 1,
- n': gleich Null oder 1, vorzugsweise gleich 1, und
- R^{δ'}: ein heterocyclischer Rest wie ein Pyridylrest oder ein Triazinylrest ist.

Bevorzugte Heteroarylsulfonamide sind Heteroarylsulfonylharnstoffe, beispielsweise Sulfonylharnstoffe der allgemeinen Formel (I)-5 und/oder deren Salze,

R^{α'}(A')_{m'}-SO₂-NR^{β'}-CO-NR^{γ'}-R^{δ'} (I)-5

worin
- R^{α'}: ein Heteroarylrest ist, der unsubstituiert oder substituiert ist, und wobei der Heteroarylrest inklusive Substituenten 1-30 C-Atome, vorzugsweise 1-20 C-Atome aufweist,
- R^{β}': ein Wasserstoffatom oder ein Kohlenwasserstoffrest ist, der unsubstituiert oder substituiert ist und inklusive Substituenten 1-10 C-Atome aufweist, z.B. unsubstituiertes oder substituiertes C₁-C₆-Alkyl, vorzugsweise ein Wasserstoffatom oder Methyl,
- R^{γ'}: ein Wasserstoffatom oder ein Kohlenwasserstoffrest ist, der unsubstituiert oder substituiert ist und inklusive Substituenten 1-10 C-Atome aufweist, z.B. unsubstituiertes oder substituiertes C₁-C₆-Alkyl, vorzugsweise ein Wasserstoffatom oder Methyl,
- A': gleich CH₂, O oder NH, vorzugsweise O, ist,
- m': gleich Null oder 1, und
- R^{δ'}: ein heterocyclischer Rest wie ein Pyridylrest oder ein Triazinylrest ist.

Besonders bevorzugt sind Heteroarylsulfonamide der nachfolgend genannten Formel (I)-6,

R^{α'}-SO₂- NH-CO-(NR')ₙ-R^{δ'} (I)-6

worin
- R^{α'}: ein substituierter Heteroarylrest, wie substituiertes Pyridyl, Thienyl, Pyrazolyl oder Imidazolyl,
- R^{γ}': H, (C₁-C₃)Alkyl, optional substituiert mit Halogen (F, C, Br, I) oder (Halo)Alkoxy (C₁-C₃), bevorzugt H oder Methyl,
- für n': gleich 1, R^{δ}' ein Pyridylrest oder ein Triazinylrest ist, vorzugsweise

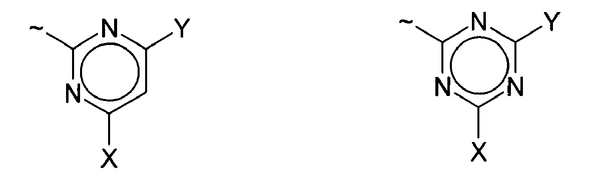

- X und Y: unabhängig voneinander gleich oder verschieden Halogen oder NR'R", worin R' und R" gleich oder verschieden H oder C₁-C₄-Alkyl sind, oder C₁-C₆-Alkyl, C₁-C₆-Alkoxy, C₁-C₆-Alkylthio, C₃-C₆-Cycloalkyl, C₂-C₆-Alkenyl, C₂-C₆-Alkynyl, C₃-C₆-Alkenyloxy oder C₃-C₆-Alkynyloxy sind, wobei jeder der acht letztgenannten Reste unsubstituiert oder durch einen oder mehrere Reste aus der Gruppe Halogen, C₁-C₄-Alkoxy und C₁-C₄-Alkylthio substituiert ist, vorzugsweise C₁-C₄-Alkyl oder C₁-C₄-Alkoxy.

Besonders bevorzugt ist R^{α'} gleich 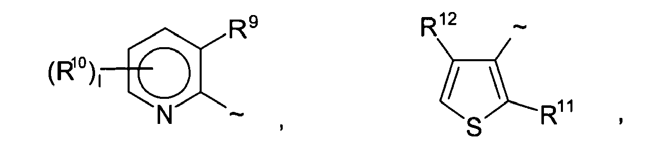 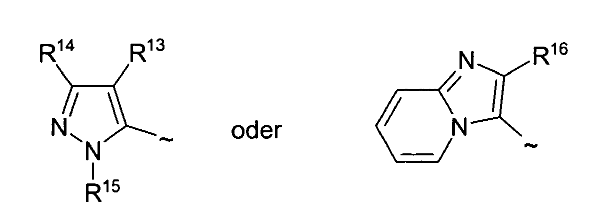 , worin
- R⁹: (C₁-C₆)Alkyl, (C₁-C₆)Alkoxy, (C₂-C₆)Alkenyloxy, (C₂-C₆)Alkinyloxy, (C₁-C₆)Alkylsulfonyl, (C₁-C₆)Alkylcarbonyl, (C₁-C₆)Alkoxycarbonyl, (C₂-C₆)Alkenyloxycarbonyl, (C₂-C₆)Alkinyloxycarbonyl, CONR'R", (C₁-C₆)Halo-Alkyl, (C₁-C₆)Halo-Alkoxy, (C₂-C₆)Halo-Alkenyloxy, (C₂-C₆)Halo-Alkinyloxy, (C₁-C₆)Halo-Alkylsulfonyl, (C₁-C₆)Halo-Alkylcarbonyl, (C₁-C₆)Halo-Alkoxycarbonyl, (C₂-C₆)Halo-Alkenyloxycarbonyl, (C₂-C₆)Halo-Alkinyloxycarbonyl,
- R¹⁰: H, (C₁-C₃)Alkyl, (C₁-C₃)Alkoxy, (C₁-C₃)Halo-Alkyl, (C₁-C₃)Halo-Alkoxy oder Halogen (F, Cl, Br, I),
- I: Null oder 1,
- R¹¹: (C₁-C₆)Alkyl, (C₁-C₆)Alkoxy, (C₂-C₆)Alkenyloxy, (C₂-C₆)Alkinyloxy, (C₁-C₆)Alkylsulfonyl**,** (C₁-C₆)Alkylcarbonyl, (C₁-C₆)Alkoxycarbonyl, (C₂-C₆)Alkenyloxycarbonyl, (C₂-C₆)Alkinyloxycarbonyl, (C₁-C₆)Halo-Alkyl, (C₁-C₆)Halo-Alkoxy, (C₂-C₆)Halo-Alkenyloxy, (C₂-C₆)Halo-Alkinyloxy, (C₁-C₆)Halo-Alkylsulfonyl, (C₁-C₆)Halo-Alkylcarbonyl, (C₁-C₆)Halo-Alkoxycarbonyl, (C₂-C₆)Halo-Alkenyloxycarbonyl, (C₂-C₆)Halo-Alkinyloxycarbonyl, CONR'R",
- R¹²: Halogen (F, Cl, Br, I), (C₁-C₆)Alkyl, (C₁-C₆)Alkoxy, (C₁-C₆)Alkylsulfonyl, (C₁-C₆)Alkoxycarbonyl, (C₂-C₆)Alkenyloxycarbonyl, (C₂-C₆)Alkinyloxycarbonyl, (C₁-C₆)Halo-Alkyl, (C₁-C₆)Halo-Alkoxy, (C₁-C₆)Halo-Alkylsulfonyl, (C₁-C₆)Halo-Alkoxycarbonyl, (C₂-C₆)Halo-Alkenyloxycarbonyl, (C₂-C₆)Halo-Alkinyloxycarbonyl,
- R¹³: (C₁-C₆)Alkoxycarbonyl, (C₂-C₆)Alkenyloxycarbonyl, (C₂-C₆)Alkinyloxycarbonyl, (C₁-C₆)Alkyl, (C₁-C₆)Alkoxy, (C₁-C₆)Alkylsulfonyl, (C₁-C₆)Halo-Alkoxycarbonyl, (C₂-C₆)Halo-Alkenyloxycarbonyl, (C₂-C₆)Halo-Alkinyloxycarbonyl, (C₁-C₆)Halo-Alkyl, (C₁-C₆)Halo-Alkoxy, (C₁-C₆)Halo-Alkylsulfonyl, Halogen (F, Cl, Br, I), CONR'R", oder R¹³ ist ein heterocyclischer Ring der gesättigt, ungesättigt oder aromatisch sein kann und vorzugsweise 4-6-Ringatome und eines oder mehrere Heteroatome aus der Gruppe N, O, S enthält, und optional durch einen oder mehrere Substituenten, vorzugsweise aus der Gruppe (C₁-C₃)Alkyl, (C₁-C₃)Alkoxy, (C₁-C₃)Halo-Alkyl, (C₁-C₃)Halo-Alkoxy oder Halogen substituiert sein kann, besonders bevorzugt 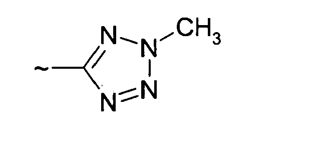
- R¹⁴: H, Halogen (F, C, Br, 1), (C₁-C₆)Alkyl, (C₁-C₆)Halo-Alkyl,
- R¹⁵: H, (C₁-C₆)Alkyl, (C₁-C₆)Halo-Alkyl,
- R¹⁶: (C₁-C₆)Alkyl, (C₁-C₆)Alkoxy, (C₂-C₆)Alkenyloxy, (C₂-C₆)Alkinyloxy, (C₁-C₆)Alkylsulfonyl, (C₁-C₆)Alkylcarbonyl, (C₁-C₆)Alkoxycarbonyl, (C₂-C₆)Alkenyloxycarbonyl, (C₂-C₆)Alkinyloxycarbonyl, (C₁-C₆)Halo-Alkyl, (C₁-C₆)Halo-Alkoxy, (C₂-C₆)Halo-Alkenyloxy, (C₂-C₆)Halo-Alkinyloxy, (C₁-C₆)Halo-Alkylsulfonyl, (C₁-C₆)Halo-Alkylcarbonyl, (C₁-C₆)Halo-Alkoxycarbonyl, (C₂-C₆)Halo-Alkenyloxycarbonyl, (C₂-C₆)Halo-Alkinyloxycarbonyl, CONR'R", insbesondere SO₂Ethyl, und
- R' und R": unabhängig voneinander H, (C₁-C₆)Alkyl, (C₁-C₆)Haloalkyl, (C₂-C₆)Alkenyl, (C₂-C₆)Haloalkenyl, (C₂-C₆)Alkinyl, (C₂-C₆)Haloalkinyl sind, oder NR'R" bildet einen heterocyclischen Ring der gesättigt, ungesättigt oder aromatisch sein kann und vorzugsweise 4-6-Ringatome und eines oder mehrere Heteroatome aus der Gruppe N, O, S enthält, und optional durch einen oder mehrere Substituenten, vorzugsweise aus der Gruppe (C₁-C₃)Alkyl, (C₁-C₃)Alkoxy, (C₁-C₃)Halo-Alkyl, (C₁-C₃)Halo-Alkoxy oder Halogen substituiert sein kann.

Besonders bevorzugte Heteroarylsulfonylharnstoffe sind z.B. Nicosulfuron und dessen Salze wie das Natriumsalz, Rimsulfuron und dessen Salze wie das Natriumsalz, Thifensulfuron-methyl und dessen Salze wie das Natriumsalz, Pyrazosulfuron-ethyl und dessen Salze wie das Natriumsalz, Flupyrsulfuron-methyl und dessen Salze wie das Natriumsalz, Sulfosulfuron und dessen Salze wie das Natriumsalz, Trifloxysulfuron und dessen Salze wie das Natriumsalz, Azimsulfuron und dessen Salze wie das Natriumsalz, Flazasulfuron und dessen Salze wie das Natriumsalz und Flucetosulfuron (1-[3-[[[[(4,6-dimethoxy-2-pyrimidinyl)amino]carbonyl]amino]sulfonyl]-2-pyridinyl]-2-fluoropropyl methoxyacetat) und dessen Salze wie das Natriumsalz.

Die vorstehend aufgeführten Wirkstoffe sind z.B. bekannt aus "The Pesticide Manual", 12. Auflage, The British Crop Protection Council (2000), oder den nach den einzelnen Wirkstoffen aufgeführten Literaturstellen.

Unter den in den erfindungsgemäßen festen, wasserdispergierbaren Formulierungen enthaltenen Sulfonamiden der allgemeinen Formel (I) (Komponente
a) werden im Sinne der vorliegenden Erfindung stets sämtliche Anwendungsformen wie Säuren, Ester, Salze und Isomere wie Stereoisomere und optische Isomere verstanden. So sind neben den neutralen Verbindungen stets auch deren Salze mit anorganischen und/oder organischen Gegenionen zu verstehen. So können Sulfonamide z.B. Salze bilden, bei denen der Wasserstoff der -SO₂-NH-Gruppe durch ein für die Landwirtschaft geeignetes Kation ersetzt ist. Diese Salze sind beispielsweise Metallsalze, insbesondere Alkalimetallsalze oder Erdalkalimetallsalze, insbesondere Natrium- und Kaliumsalze, oder auch Ammoniumsalze oder Salze mit organischen Aminen. Ebenso kann Salzbildung durch Anlagerung einer Säure an basischen Gruppen, wie z.B. Amino und Alkylamino, erfolgen. Geeignete Säuren hierfür sind starke anorganische und organische Säuren, beispielsweise HCl, HBr, H₂SO₄ oder HNO₃. Bevorzugte Ester sind die Alkylester, insbesondere die C₁-C₁₀-Alkylester wie Methylester.

Soweit in der oben genannten Beschreibung der Begriff Acylrest verwendet wird, bedeutet dieser den Rest einer organischen Säure, der formal durch Abspaltung einer OH-Gruppe aus der organischen Säure entsteht, z.B. der Rest einer Carbonsäure und Reste davon abgeleiteter Säuren wie der Thiocarbonsäure, gegebenenfalls N-substituierten Iminocarbonsäuren oder die Reste von Kohlensäuremonoestern, gegebenenfalls N-substituierten Carbaminsäuren, Sulfonsäuren, Sulfinsäuren, Phosphonsäuren, Phosphinsäuren.
Ein Acylrest ist bevorzugt Formyl oder Acyl aus der Gruppe CO-R^{z}, CS-R^{z}, CO-OR^{z}, CS-OR^{z}, CS-SR^{z}, SOR^{z} oder SO₂R^{z}, wobei R^{z} jeweils einen C₁-C₁₀-Kohlenwasserstoffrest wie C₁-C₁₀-Alkyl oder C₆-C₁₀-Aryl bedeutet, der unsubstituiert oder substituiert ist, z.B. durch einen oder mehrere Substituenten aus der Gruppe Halogen wie F, Cl, Br, I, Alkoxy, Haloalkoxy, Hydroxy, Amino, Nitro, Cyano oder Alkylthio, oder R^{Z} bedeutet Aminocarbonyl oder Aminosulfonyl, wobei die beiden letztgenannten Reste unsubstituiert, N-monosubstituiert oder N,N-disubstituiert sind, z.B. durch Substituenten aus der Gruppe Alkyl oder Aryl.
Acyl bedeutet beispielsweise Formyl, Halogenalkylcarbonyl, Alkylcarbonyl wie (C₁-C₄)Alkylcarbonyl, Phenylcarbonyl, wobei der Phenylring substituiert sein kann, oder Alkyloxycarbonyl, wie (C₁-C₄) Alkyloxycarbonyl, Phenyloxycarbonyl, Benzyloxycarbonyl, Alkylsulfonyl, wie (C₁-C₄) Alkylsulfonyl, Alkylsulfinyl, wie C₁-C₄(Alkylsulfinyl), N-Alkyl-1-iminoalkyl, wie N-(C₁-C₄)-1-imino-(C₁-C₄)alkyl und andere Reste von organischen Säuren.
Ein Kohlenwasserstoffrest bedeutet ein geradkettiger, verzweigter oder cyclischer und gesättigter oder ungesättigter aliphatischer oder aromatischer Kohlenwasserstoffrest, z.B. Alkyl, Alkenyl, Alkinyl, Cycloalkyl, Cycloalkenyl oder Aryl. Ein Kohlenwasserstoffrest weist bevorzugt 1 bis 40 C-Atome, vorzugsweise 1 bis 30 C-Atome auf; besonders bevorzugt bedeutet ein Kohlenwasserstoffrest Alkyl, Alkenyl oder Alkinyl mit bis zu 12 C-Atomen oder Cycloalkyl mit 3, 4, 5, 6 oder 7 Ringatomen oder Phenyl.
Aryl bedeutet ein mono-, bi- oder polycyclisches aromatisches System, beispielsweise Phenyl, Naphthyl, Tetrahydronaphthyl, Indenyl, Indanyl, Pentalenyl, Fluorenyl und ähnliches, vorzugsweise Phenyl.
Ein heterocyclischer Rest oder Ring (Heterocyclyl) kann gesättigt, ungesättigt oder heteroaromatisch und unsubstituiert oder substituiert sein; er enthält vorzugsweise ein oder mehrere Heteroatome im Ring, vorzugsweise aus der Gruppe N, O und S; vorzugsweise ist er ein aliphatischer Heterocyclylrest mit 3 bis 7 Ringatomen oder ein heteroaromatischer Rest mit 5 oder 6 Ringatomen und enthält 1, 2 oder 3 Heteroatome. Der heterocyclische Rest kann z.B. ein heteroaromatischer Rest oder Ring (Heteroaryl) sein, wie z.B. ein mono-, bi- oder polycyclisches aromatisches System, in dem mindestens 1 Ring ein oder mehrere Heteroatome enthält, beispielsweise Pyridyl, Pyrimidinyl, Pyridazinyl, Pyrazinyl, Triazinyl, Thienyl, Thiazolyl, Oxazolyl, Furyl, Pyrrolyl, Pyrazolyl und Imidazolyl, oder ist ein partiell oder vollständig hydrierter Rest wie Oxiranyl, Oxetanyl, Pyrrolidyl, Piperidyl, Piperazinyl, Triazolyl, Dioxolanyl, Morpholinyl, Tetrahydrofuryl. Bevorzugt sind Pyrimidinyl und Triazinyl. Als Substituenten für einen substituierten heterocyclischen Rest kommen die weiter unten genannten Substituenten in Frage, zusätzlich auch Oxo. Die Oxogruppe kann auch an den Heteroringatomen, die in verschiedenen Oxidationsstufen existieren können, z.B. bei N und S, auftreten.
Substituierte Reste, wie substituierte Kohlenwasserstoffreste, z.B. substituiertes Alkyl, Alkenyl, Alkinyl, Aryl, Phenyl und Benzyl, oder substituiertes Heterocyclyl oder Heteroaryl, bedeuten beispielsweise einen vom unsubstituierten Grundkörper abgeleiteten substituierten Rest, wobei die Substituenten beispielsweise einen oder mehrere, vorzugsweise 1, 2 oder 3 Reste aus der Gruppe Halogen, Alkoxy, Haloalkoxy, Alkylthio, Hydroxy, Amino, Nitro, Carboxy, Cyano, Azido, Alkoxycarbonyl, Alkylcarbonyl, Formyl, Carbamoyl, Mono- und Dialkylaminocarbonyl, substituiertes Amino, wie Acylamino, Mono- und Dialkylamino, und Alkylsulfinyl, Haloalkylsulfinyl, Alkylsulfonyl, Haloalkylsulfonyl und, im Falle cyclischer Reste, auch Alkyl und Haloalkyl sowie den genannten gesättigten kohlenwasserstoffhaltigen Resten entsprechende ungesättigte aliphatische Reste, wie Alkenyl, Alkinyl, Alkenyloxy, Alkinyloxy etc. bedeuten. Bei Resten mit C-Atomen sind solche mit 1 bis 4 C-Atomen, insbesondere 1 oder 2 C-Atomen, bevorzugt. Bevorzugt sind in der Regel Substituenten aus der Gruppe Halogen, z.B. Fluor und Chlor, (C₁-C₄)Alkyl, vorzugsweise Methyl oder Ethyl, (C₁-C₄)Haloalkyl, vorzugsweise Trifluormethyl, (C₁-C₄)Alkoxy, vorzugsweise Methoxy oder Ethoxy, (C₁-C₄)Haloalkoxy, Nitro und Cyano. Besonders bevorzugt sind dabei die Substituenten Methyl, Methoxy und Chlor.
Gegebenenfalls substituiertes Phenyl ist vorzugsweise Phenyl, das unsubstituiert oder ein- oder mehrfach, vorzugsweise bis zu dreifach durch gleiche oder verschiedene Reste, vorzugsweise aus der Gruppe Halogen, (C₁-C₄)Alkyl, (C₁-C₄)Alkoxy, (C₁-C₄)Halogenalkyl, (C₁-C₄)Halogenalkoxy und Nitro substituiert ist, z.B. o-, m- und p-Tolyl, Dimethylphenyl, 2-, 3- und 4-Chlorphenyl, 2-, 3- und 4-Trifluor- und -Trichlorphenyl, 2,4-, 3,5-, 2,5- und 2,3-Dichlorphenyl, o-, m- und p-Methoxyphenyl.
Cycloalkyl bedeutet ein carbocyclisches, gesättigtes Ringsystem vorzugsweise mit 3-6 C-Atomen, z.B. Cyclopropyl, Cyclobutyl, Cyclopentyl oder Cyclohexyl. Die kohlenstoffhaltigen Reste wie Alkyl, Alkoxy, Haloalkyl, Haloalkoxy, Alkylamino und Alkylthio sowie die entsprechenden ungesättigten und/oder substituierten Reste im Kohlenstoffgerüst jeweils geradkettig oder verzweigt sein. Wenn nicht speziell angegeben, sind bei diesen Resten die niederen Kohlenstoffgerüste, z.B. mit 1 bis 6 C-Atomen bzw. bei ungesättigten Gruppen mit 2 bis 6 C-Atomen, bevorzugt. Alkylreste, auch in den zusammengesetzten Bedeutungen wie Alkoxy, Haloalkyl usw., bedeuten z.B. Methyl, Ethyl, n- oder i-Propyl, n-, i-, t- oder 2-Butyl, Pentyle, Hexyle, wie n-Hexyl, i-Hexyl und 1,3-Dimethylbutyl, Heptyle, wie n-Heptyl, 1-Methylhexyl und 1,4-Dimethylpentyl; Alkenyl- und Alkinylreste haben die Bedeutung der den Alkylresten entsprechenden möglichen ungesättigten Reste; Alkenyl bedeutet z.B. Allyl, 1-Methylprop-2-en-1-yl, 2-Methyl-prop-2-en-1-yl, But-2-en-1-yl, But-3-en-1-yl, 1-Methyl-but-3-en-1-yl und 1-Methyl-but-2-en-1-yl; Alkinyl bedeutet z.B. Propargyl, But-2-in-1-yl, But-3-in-1-yl, 1-Methyl-but-3-in-1-yl. Halogen bedeutet beispielsweise Fluor, Chlor, Brom oder Iod. Haloalkyl, -alkenyl und -alkinyl bedeuten durch Halogen, vorzugsweise durch Fluor, Chlor und/oder Brom, insbesondere durch Fluor oder Chlor, teilweise oder vollständig substituiertes Alkyl, Alkenyl bzw. Alkinyl, z.B. CF₃, CHF₂, CH₂F, CF₃CF₂, CH₂FCHCI, CCl₃, CHCl₂, CH₂CH₂Cl; Haloalkoxy ist z.B. OCF₃, OCHF₂, OCH₂F, CF₃CF₂O, OCH₂CF₃ und OCH₂CH₂Cl; entsprechendes gilt für Haloalkenyl und andere durch Halogen substituierte Reste.

Ganz besonders bevorzugt von den Wirkstoffen aus der Gruppe der Sulfonamide der allgemeinen Formel (I) und deren Salze (Komponente a) sind Azimsulfuron und dessen Salze wie das Natriumsalz, Bensulfuron-methyl, Chlorimuron-ethyl, Chlorsulfuron, Ethametsulfuron-methyl, Flupyrsulfuron-methyl und dessen Salze wie das Natriumsalz, Metsulfuron-methyl, Nicosulfuron und dessen Salze wie das Natriumsalz, Rimsulfuron und dessen Salze wie das Natriumsalz, Sulfometuron-methyl, Thifensulfuron-methyl und dessen Salze wie das Natriumsalz, Tribenuron-methyl, Triflusulfuron-methyl, Methyl-4-[(4,5-dihydro-3-methoxy-4-methyl-5-oxo-1 H-1,2,4-triazol-1-yl)carboxamidosulfonyl]-5-metylthiophen-3-carboxylat und dessen Natriumsalz sowie Foramsulfuron und dessen Natriumsalz.

Die Wirkstoffe aus der Gruppe der Sulfonamide der allgemeinen Formel (I) und deren Salze (Komponente a) sind in den erfindungsgemäßen Formulierungen im allgemeinen in Mengen von 0,1 - 80 Gew.-%, bevorzugt 1 - 75 Gew.-%, besonders bevorzugt 3-50 Gew.-%, ganz besonders bevorzugt 5 - 25 Gew.-% enthalten, dabei bezieht sich die Angabe "Gew.-%" (Gewichtsprozent) hier und in der gesamten Beschreibung, wenn nicht anders definiert, auf das relative Gewicht der jeweiligen Komponente bezogen auf das Gesamtgewicht der Formulierung.

Unter den als Komponente (b) gegebenenfalls enthaltenen, mit dem Begriff "Safener" bezeichneten Wirkstoffen werden Verbindungen verstanden, die geeignet sind, phytotoxische Wirkungen von Pflanzenschutzmittelwirkstoffen wie Herbiziden an Kulturpflanzen zu reduzieren.

Die Safener (Komponente b) sind vorzugsweise ausgewählt aus der Gruppe bestehend aus:
a) Verbindungen der Formeln (S-II) bis (S-IV), 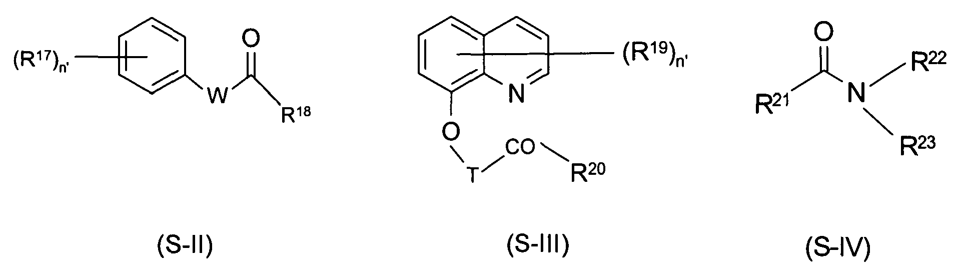 wobei die Symbole und Indizes folgende Bedeutungen haben:
   - n': ist eine natürliche Zahl von 0 bis 5, vorzugsweise 0 bis 3;
   - T: ist eine (C₁ oder C₂)-Alkandiylkette, die unsubstituiert oder mit einem oder zwei (C₁-C₄)Alkylresten oder mit [(C₁-C₃)-Alkoxy]-carbonyl substituiert ist;
   - W: ist ein unsubstituierter oder substituierter divalenter heterocyclischer Rest aus der Gruppe der teilungesättigten oder aromatischen Fünfring-Heterocyclen mit 1 bis 3 Heteroringatomen des Typs N oder O, wobei mindestens ein N-Atom und höchstens ein O-Atom im Ring enthalten ist, vorzugsweise ein Rest aus der Gruppe (W1) bis (W4), 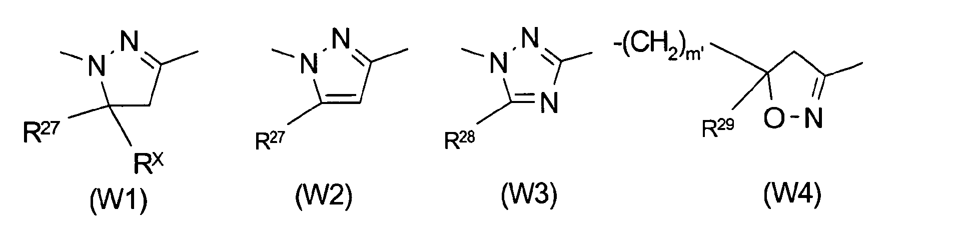
   - m': ist 0 oder 1;
   - R¹⁷, R¹⁹: sind gleich oder verschieden Halogen, (C₁-C₄)Alkyl, (C₁-C₄)Alkoxy, Nitro oder (C₁-C₄)Haloalkyl;
   - R¹⁸, R²⁰: sind gleich oder verschieden OR²⁴, SR²⁴ oder NR²⁴R²⁵ oder ein gesättigter oder ungesättigter 3- bis 7-gliedriger Heterocyclus mit mindestens einem N-Atom und bis zu 3 Heteroatomen, vorzugsweise aus der Gruppe O und S, der über das N-Atom mit der Carbonylgruppe in (S-II) bzw. (S-III) verbunden ist und unsubstituiert oder durch Reste aus der Gruppe (C₁-C₄)Alkyl, (C₁-C₄)Alkoxy oder gegebenenfalls substituiertes Phenyl substituiert ist, vorzugsweise ein Rest der Formel OR²⁴, NHR²⁵ oder N(CH₃)₂, insbesondere der Formel OR²⁴;
   - R²⁴: ist Wasserstoff oder ein unsubstituierter oder substituierter aliphatischer Kohlenwasserstoffrest, vorzugsweise mit insgesamt 1 bis 18 C-Atomen;
   - R²⁵: ist Wasserstoff, (C₁-C₆)Alkyl, (C₁-C₆)Alkoxy oder substituiertes oder unsubstituiertes Phenyl;
   - R^{x}: ist H, (C₁-C₈)Alkyl, C₁-C₈(Haloalkyl), (C₁-C₄)Alkoxy(C₁-C₈)Alkyl, Cyano oder COOR²⁶, worin R²⁶ Wasserstoff, (C₁-C₈)Alkyl, (C₁-C₈)Haloalkyl, (C₁-C₄)Alkoxy-(C₁-C₄)alkyl, (C₁-C₆)Hydroxyalkyl, (C₃-C₁₂)Cycloalkyl oder Tri-(C₁-C₄)-alkyl-silyl ist;
   - R²⁷, R²⁸, R²⁹: sind gleich oder verschieden Wasserstoff, (C₁-C₈)Alkyl, (C₁-C₈)Haloalkyl, (C₃-C₁₂)Cycloalkyl oder substituiertes oder unsubstituiertes Phenyl;
   - R²¹: ist (C₁-C₄)Alkyl, (C₁-C₄)Haloalkyl, (C₂-C₄)Alkenyl, (C₂-C₄)Haloalkenyl, (C₃-C₇)Cycloalkyl, vorzugsweise Dichlormethyl;
   - R²², R²³: ist gleich oder verschieden Wasserstoff, (C₁-C₄)Alkyl, (C₂-C₄)Alkenyl, (C₂-C₄)Alkinyl, (C₁-C₄)Haloalkyl, (C₂-C₄)Haloalkenyl, (C₁-C₄)Alkylcarbamoyl-(C₁-C₄)alkyl, (C₂-C₄)Alkenylcarbamoyl-(C₁-C₄)alkyl, (C₁-C₄)Alkoxy-(C₁-C₄)alkyl, Dioxolanyl-(C₁-C₄)alkyl, Thiazolyl, Furyl, Furylalkyl, Thienyl, Piperidyl, substituiertes oder unsubstituiertes Phenyl, oder R²² und R²³ bilden zusammen einen substituierten oder unsubstituierten heterocyclischen Ring, vorzugsweise einen Oxazolidin-, Thiazolidin-, Piperidin-, Morpholin-, Hexahydropyrimidin- oder Benzoxazinring;
   vorzugsweise Safener folgender Untergruppen von Verbindungen der Formeln (S-II) bis (S-IV):
   - Verbindungen vom Typ der Dichlorphenylpyrazolin-3-carbonsäure (d.h. der Formel (S-II), worin W = (W1) und (R17)_{n'} = 2,4-Cl₂), vorzugsweise Verbindungen wie 1-(2,4-Dichlorphenyl)-5-(ethoxycarbonyl)-5-methyl-2-pyrazolin-3-carbonsäureethylester (II-1, Mefenpyr-diethyl), Mefenpyr-dimethyl und Mefenpyr (II-0), und verwandte Verbindungen, wie sie in der WO-A-91/07874 beschrieben sind;
   - Derivate der Dichlorphenylpyrazolcarbonsäure (d.h. der Formel (S-II), worin W = (W2) und **(**R¹⁷)_{n'} = 2,4-Cl₂ ist), vorzugsweise Verbindungen wie 1-(2,4-Dichlorphenyl)-5-methyl-pyrazol-3-carbonsäureethylester (II-2), 1-(2,4-Dichlorphenyl)-5-isopropyl-pyrazol-3-carbonsäureethylester (II-3), 1-(2,4-Dichlorphenyl)-5-(1,1-dimethyl-ethyl)pyrazol-3-carbonsäureethylester (II-4), 1-(2,4-Dichlorphenyl)-5-phenyl-pyrazol-3-carbonsäureethylester (II-5) und verwandte Verbindungen, wie sie in EP-A-0333131 und EP-A-0269806 beschrieben sind;
   - Verbindungen vom Typ der Triazolcarbonsäuren (d.h. der Formel (S-II), worin W = (W3) und (R¹⁷)_{n'} = 2,4-Cl₂ ist), vorzugsweise Verbindungen wie Fenchlorazolethyl, d.h. 1-(2,4-Dichlorphenyl)-5-trichlormethyl-(1H)-1,2,4-triazol-3-carbonsäureethylester (II-6), und verwandte Verbindungen (siehe EP-A-0174562 und EP-A-0346620);
   - Verbindungen vom Typ der 5-Benzyl- oder 5-Phenyl-2-isoxazolin-3-carbonsäure oder der 5,5-Diphenyl-2-isoxazolin-3-carbonsäure wie Isoxadifen (II-12), (worin W = (W4) ist), vorzugsweise Verbindungen wie 5-(2,4-Dichlorbenzyl)-2-isoxazolin-3-carbonsäureethylester (II-7) oder 5-Phenyl-2-isoxazolin-3-carbonsäureethylester (II-8) und verwandte Verbindungen, wie sie in WO-A-91/08202 beschrieben sind, oder der 5,5-Diphenyl-2-isoxazolin-carbonsäureethylester (II-9, Isoxadifen-ethyl) oder -n-propylester (II-10) oder der 5-(4-Fluorphenyl)-5-phenyl-2-isoxazolin-3-carbonsäureethylester (II-11), wie sie in der WO-A-95/07897 beschrieben sind.
   - Verbindungen vom Typ der 8-Chinolinoxyessigsäure, z.B. solche der Formel (S-III), worin (R¹⁹)_{n'} = 5-Cl, R²⁰ = OR²⁴ und T = CH₂ ist, vorzugsweise die Verbindungen (5-Chlor-8-chinolinoxy)essigsäure-(1-methylhexyl)-ester (III-1, Cloquintocet-mexyl), (5-Chlor-8-chinolinoxy)essigsäure-(1,3-dimethyl-but-1-yl)-ester (III-2), (5-Chlor-8-chinolinoxy)essigsäure-4-allyl-oxy-butylester (III-3), (5-Chlor-8-chinolinoxy)essigsäure-1-allyloxy-prop-2-ylester (111-4), (5-Chlor-8-chinolinoxy)essigsäureethylester (III-5), (5-Chlor-8-chinolinoxy)essigsäuremethylester (III-6), (5-Chlor-8-chinolinoxy)essigsäureallylester (III-7), (5-Chlor-8-chinolinoxy)essigsäure-2-(2-propyliden-iminoxy)-1-ethylester (111-8), (5-Chlor-8-chinolinoxy)essigsäure-2-oxo-prop-1-ylester (III-9), (5-Chlor-8-chinolinoxy)essigsäure (111-10) und dessen Salze wie sie z.B. in der WO-A-02/34048 beschrieben sind, und verwandte Verbindungen, wie sie in EP-A-0860750, EP-A-0094349 und EP-A-0191736 oder EP-A-0492366 beschrieben sind.
   - Verbindungen vom Typ der (5-Chlor-8-chinolinoxy)-malonsäure, d.h. der Formel (S-III), worin (R¹⁹)_{n'} **=** 5-Cl, R²⁰= OR²⁴, T = -CH(COO-Alkyl)- ist, vorzugsweise die Verbindungen (5-Chlor-8-chinolinoxy)-malonsäure-diethylester (III-11), (5-Chlor-8-chinolinoxy)-malonsäurediallylester, (5-Chlor-8-chinolinoxy)-malonsäure-methyl-ethylester und verwandte Verbindungen, wie sie in EP-A-0582198 beschrieben sind.
   - Verbindungen vom Typ der Dichloracetamide, d.h. der Formel (S-IV), vorzugsweise: N,N-Diallyl-2,2-dichloracetamid (Dichlormid (IV-1), aus US 4,137,070), 4-Dichloracetyl-3,4-dihydro-3-methyl-2H-1,4-benzoxazin (IV-2, Benoxacor, aus EP 0149974), N1,N2-Diallyl-N2-dichloracetylglycinamid (DKA-24 (IV-3), aus HU 2143821), 4-Dichloracetyl-1-oxa-4-aza-spiro[4,5]decan (AD-67), 2,2-Dichlor-N-(1,3-dioxolan-2-ylmethyl)-N-(2-propenyl)acetamid (PPG-1292), 3-Dichloracetyl-2,2,5-trimethyloxazolidin (R-29148, IV-4), 3-Dichloracetyl-2,2-dimethyl-5-phenyloxazolidin, 3-Dichloracetyl-2,2-dimethyl-5-(2-thienyl)oxazolidin, 3-Dichloracetyl-5-(2-furanyl)-2,2-dimethyloxazolidin (Furilazole (IV-5), MON 13900), 1-Dichloracetyl-hexahydro-3,3,8a-trimethylpyrrolo[1,2-a]pyrimidin-6(2H)-on (Dicyclonon, BAS 145138),
b) eine oder mehreren Verbindungen aus Gruppe:
   1,8-Naphthalsäureanhydrid, Methyl-diphenylmethoxyacetat, 1-(2-Chlorbenzyl)-3-(1-methyl-1-phenylethyl)harnstoff (Cumyluron), O,O-Diethyl S-2-ethylthioethyl phosphordithioat (Disulfoton), 4-Chlorphenyl-methylcarbamat (Mephenate), O,O-Diethyl-O-phenylphosphorotioat (Dietholate), 4-Carboxy-3,4-dihydro-2H-1-benzopyran-4-essigsäure (CL-304415, CAS-Regno: 31541-57-8), Cyanomethoxyimino(phenyl)acetonitril (Cyometrinil), 1,3-Dioxolan-2-ylmethoxyimino(phenyl)acetonitril (Oxabetrinil), 4'-Chlor-2,2,2-trifluoracetophenon-O-1,3-dioxolan-2-ylmethyloxim (Fluxofenim), 4,6-Dichlor-2-phenylpyrimidin (Fenclorim), Benzyl-2-chlor-4-trifluormethyl-1,3-thiazol-5-carboxylat (Flurazole), 2-Dichlormethyl-2-methyl-1,3-dioxolan (MG-191), N-(4-Methylphenyl)-N'-(1-methyl-1-phenylethyl)harnstoff (Dymron), (2,4-Dichlorphenoxy)essigsäure (2,4-D), (4-Chlorphenoxy)essigsäure, (R,S)-2-(4-Chlor-o-tolyloxy)propionsäure (Mecoprop), 4-(2,4-Dichlorphenoxy)buttersäure (2,4-DB), (4-Chlor-o-tolyloxy)essigsäure (MCPA), 4-(4-Chlor-o-tolyloxy)buttersäure, 4-(4-Chlorphenoxy)buttersäure, 3,6-Dichlor-2-methoxybenzoesäure (Dicamba), 1-(Ethoxycarbonyl)ethyl 3,6-dichlor-2-methoxybenzoat (Lactidichlor) sowie deren Salze und Ester, vorzugsweise (C₁-C₈);
c) N-Acylsulfonamide der Formel (S-V) und ihre Salze, 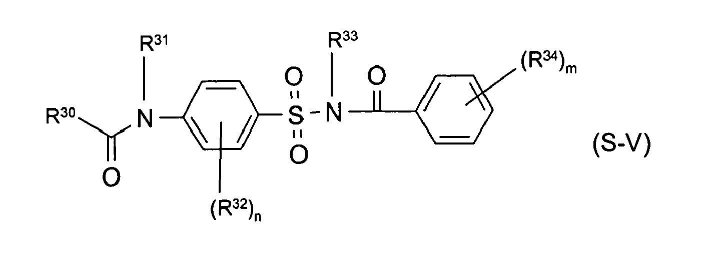 worin
   - R³⁰: Wasserstoff, einen Kohlenwasserstoffrest, einen Kohlenwasserstoffoxyrest, einen Kohlenwasserstoffthiorest oder einen Heterocyclylrest, der vorzugsweise über ein C-Atom gebunden ist, wobei jeder der letztgenannten 4 Reste unsubstituiert oder durch einen oder mehrere gleiche oder verschiedene Reste aus der Gruppe Halogen, Cyano, Nitro, Amino, Hydroxy, Carboxy, Formyl, Carbonamid, Sulfonamid und Reste der Formel -Z^{a}-R^{a} substituiert ist,
   wobei jeder Kohlenwasserstoffteil vorzugsweise 1 bis 20 C-Atome aufweist und ein C-haltiger Rest R³⁰ inklusive Substituenten vorzugsweise 1 bis 30 C-Atome aufweist;
   - R³¹: Wasserstoff oder (C₁-C₄)-Alkyl, vorzugsweise Wasserstoff, oder
   - R³⁰ und R³¹: zusammen mit der Gruppe der Formel -CO-N- den Rest eines 3- bis 8-gliedrigen gesättigten oder ungesättigten Rings;
   - R³²: gleich oder verschieden Halogen, Cyano, Nitro, Amino, Hydroxy, Carboxy, Formyl, CONH₂, SO₂NH₂ oder einen Rest der Formel -Z^{b}-R^{b} ;
   - R³³: Wasserstoff oder (C₁-C₄)-Alkyl, vorzugsweise H;
   - R³⁴: gleich oder verschieden Halogen, Cyano, Nitro, Amino, Hydroxy, Carboxy, CHO, CONH₂, SO₂NH₂ oder einen Rest der Formel-Z^{c}-R^{c} ;
   - R^{a}: einen Kohlenwasserstoffrest oder einen Heterocyclylrest, wobei jeder der beiden letztgenannten Reste unsubstituiert oder durch einen oder mehrere gleiche oder verschiedene Reste aus der Gruppe Halogen, Cyano, Nitro, Amino, Hydroxy, Mono- und Di-[(C₁-C₄)-alkyl]-amino substituiert ist, oder einen Alkylrest, in dem mehrere, vorzugsweise 2 oder 3, nicht benachbarte CH₂-Gruppen jeweils durch ein Sauerstoffatom ersetzt sind;
   - R^{b} ,R^{c}: gleich oder verschieden einen Kohlenwasserstoffrest oder einen Heterocyclylrest, wobei jeder der beiden letztgenannten Reste unsubstituiert oder durch einen oder mehrere gleiche oder verschiedene Reste aus der Gruppe Halogen, Cyano, Nitro, Amino, Hydroxy, Phosphoryl, Halogen-(C₁-C₄)-alkoxy, Mono- und Di-[(C₁-C₄)-alkyl]-amino substituiert ist, oder einen Alkylrest, in dem mehrere, vorzugsweise 2 oder 3, nicht benachbarte CH₂-Gruppen jeweils durch ein Sauerstoffatom ersetzt sind;
   - Z^{a}: eine divalente Gruppe der Formel -O-, -S-, -CO-, -CS-, -CO-O-, -CO-S-, -O-CO-, -S-CO-, -SO-, -SO₂-, -NR*-, -CO-NR*-, -NR*-CO-, -SO₂-NR*- oder -NR*-SO₂-, wobei die rechts angegebene Bindung der jeweiligen divalenten Gruppe die Bindung zum Rest R^{a} ist und wobei die R* in den letztgenannten 5 Resten unabhängig voneinander jeweils H, (C₁-C₄)-Alkyl oder Halo-(C₁-C₄)-alkyl bedeuten;
   - Z^{b}, Zc: unabhängig voneinander eine direkte Bindung oder eine divalente Gruppe der Formel -O-, -S-, -CO-, -CS-, -CO-O-, -CO-S-, -O-CO-, -S-CO-, -SO-, -SO₂-, -NR*-, -SO₂-NR*-, -NR*-SO₂-, -CO-NR*-oder -NR*-CO-, wobei die rechts angegebene Bindung der jeweiligen divalenten Gruppe die Bindung zum Rest R^{b} bzw. R^{c} ist und wobei die R* in den letztgenannten 5 Resten unabhängig voneinander jeweils H, (C₁-C₄)-Alkyl oder Halo-(C₁-C₄)-alkyl bedeuten;
   - n: eine ganze Zahl von 0 bis 4, vorzugsweise 0, 1 oder 2, insbesondere 0 oder 1, und
   - m: eine ganze Zahl von 0 bis 5, vorzugsweise 0, 1, 2 oder 3, insbesondere 0, 1 oder 2; bedeuten;
   vorzugsweise Safener von Verbindungen der Formel (S-V), worin
   - R³⁰ = H₃C-O-CH₂-, R³¹ = R³³ = H, R³⁴ = 2-OMe ist (V-1),
   - R³⁰ = H₃C-O-CH₂-, R³¹ = R³³ = H, R³⁴ = 2-OMe-5-Cl ist (V-2),
   - R³⁰ = Cyclopropyl, R³¹ = R³³ = H, R³⁴ = 2-OMe ist (V-3),
   - R³⁰ = Cyclopropyl, R³¹ = R³³ = H, R³⁴ = 2-OMe-5-Ci ist (V-4),
   - R³⁰ = Cyclopropyl, R³¹ = R³³ = H, R³⁴ = 2-Me ist (V-5),
   - R³⁰ = tert. Butyl, R³¹ = R³³ = H, R³⁴ = 2-OMe ist (V-6).
d) Acylsulfamoylbenzoesäureamide der allgemeinen Formel (S-VI), gegebenenfalls auch in Salzform, 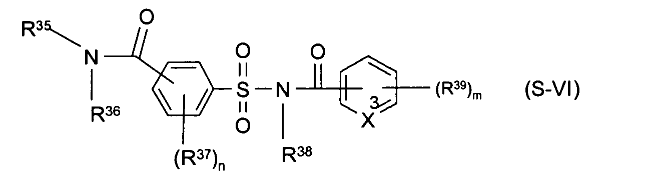 worin
   - X³: CH oder N;
   - R³⁵: Wasserstoff, Heterocyclyl oder einen Kohlenwasserstoffrest, wobei die beiden letztgenannten Reste gegebenenfalls durch einen oder mehrere, gleiche oder verschiedene Reste aus der Gruppe Halogen, Cyano, Nitro, Amino, Hydroxy, Carboxy, CHO, CONH₂, SO₂NH₂ und Z^{a}-R^{a} substituiert sind;
   - R³⁶: Wasserstoff, Hydroxy, (C₁-C₆)-Alkyl, (C₂-C₆)-Alkenyl, (C₂-C₆)-Alkinyl, (C₁-C₆)-Alkoxy, (C₂-C₆)-Alkenyloxy, wobei die fünf letztgenannten Reste gegebenenfalls durch einen oder mehrere, gleiche oder verschiedene Reste aus der Gruppe Halogen, Hydroxy, (C₁-C₄)-Alkyl, (C₁-C₄)-Alkoxy und (C₁-C₄)-Alkylthio substituiert sind, oder
   - R³⁵ und R³⁶: zusammen mit dem sie tragenden Stickstoffatom einen 3- bis 8-gliedrigen gesättigten oder ungesättigten Ring;
   - R³⁷: Halogen, Cyano, Nitro, Amino, Hydroxy, Carboxy, CHO, CONH₂, SO₂NH₂ oder Z^{b}-R^{b};
   - R³⁸: Wasserstoff, (C₁-C₄)-Alkyl, (C₂-C₄)-Alkenyl oder (C₂-C₄)-Alkinyl;
   - R³⁹: Halogen, Cyano, Nitro, Amino, Hydroxy, Carboxy, Phosphoryl, CHO, CONH₂, SO₂NH₂ oder Z^{c}-R^{c};
   - R^{a}: einen (C₂-C₂₀)-Alkylrest, dessen Kohlenstoffkette ein- oder mehrfach durch Sauerstoffatome unterbrochen ist, Heterocyclyl oder einen Kohlenwasserstoffrest, wobei die zwei letztgenannten Reste gegebenenfalls durch einen oder mehrere, gleiche oder verschiedene Reste aus der Gruppe Halogen, Cyano, Nitro, Amino, Hydroxy, Mono- und Di-[(C₁-C₄)-alkyl]-amino substituiert sind;
   - R^{b}, R^{c}: gleich oder verschieden einen (C₂-C₂₀)-Alkylrest, dessen Kohlenstoffkette ein- oder mehrfach durch Sauerstoffatome unterbrochen ist, Heterocyclyl oder einen Kohlenwasserstoffrest, wobei die zwei letztgenannten Reste gegebenenfalls durch einen oder mehrere, gleiche oder verschiedene Reste aus der Gruppe Halogen, Cyano, Nitro, Amino, Hydroxy, Phosphoryl, (C₁-C₄)-Haloalkoxy, Mono- und Di-[(C₁-C₄)-alkyl]-amino substituiert sind;
   - Z^{a}: eine divalente Einheit aus der Gruppe O, S, CO, CS, C(O)O, C(O)S, SO, SO₂, NR^{d}, C(O)NR^{d} oder SO₂NR^{d};
   - Z^{b}, z^{c}: gleich oder verschieden eine direkte Bindung oder eine divalente Einheit aus der Gruppe O, S, CO, CS, C(O)O, C(O)S, SO, SO₂, NR^{d}, SO₂NR^{d} oder C(O)NR^{d};
   - R^{d}: Wasserstoff, (C₁-C₄)-Alkyl oder (C₁-C₄)-Haloalkyl;
   - n: eine ganze Zahl von 0 bis 4, und
   - m: für den Fall, dass X für CH steht, eine ganze Zahl von 0 bis 5, und für den Fall, dass X für N steht, eine ganze Zahl von 0 bis 4 bedeuten;
   vorzugsweise Safener von Verbindungen der Formel (S-VI), in der
   - X³: CH;
   - R³⁵: Wasserstoff, (C₁-C₆)-Alkyl, (C₃-C₆)-Cycloalkyl, (C₂-C₆)-Alkenyl, (C₅-C₆)-Cycloalkenyl, Phenyl oder 3- bis 6-gliedriges Heterocyclyl mit bis zu drei Heteroatomen aus der Gruppe Stickstoff, Sauerstoff und Schwefel, wobei die sechs letztgenannten Reste gegebenenfalls durch einen oder mehrere, gleiche oder verschiedene Substituenten aus der Gruppe Halogen, (C₁-C₆)-Alkoxy, (C₁-C₆)-Haloalkoxy, (C₁-C₂)-Alkylsulfinyl, (C₁-C₂)-Alkylsulfonyl, (C₃-C₆)-Cycloalkyl, (C₁-C₄)-Alkoxycarbonyl, (C₁-C₄)-Alkylcarbonyl und Phenyl und im Falle cyclischer Reste auch (C₁-C₄)-Alkyl und (C₁-C₄)-Haloalkyl substituiert sind;
   - R³⁶: Wasserstoff, (C₁-C₆)-Alkyl, (C₂-C₆)-Alkenyl, (C₂-C₆)-Alkinyl, wobei die drei letztgenannten Reste gegebenenfalls durch einen oder mehrere, gleiche oder verschiedene Substituenten aus der Gruppe Halogen, Hydroxy, (C₁-C₄)-Alkyl, (C₁-C₄)-Alkoxy und (C₁-C₄)-Alkylthio substituiert sind;
   - R³⁷: Halogen, (C₁-C₄)-Haloalkyl, (C₁-C₄)-Haloalkoxy, Nitro, (C₁-C₄)-Alkyl, (C₁-C₄)-Alkoxy, (C₁-C₄)-Alkylsulfonyl, (C₁-C₄)-Alkoxycarbonyl oder (C₁-C₄)-Alkylcarbonyl;
   - R³⁸: Wasserstoff;
   - R³⁹: Halogen, Nitro, (C₁-C₄)-Alkyl, (C₁-C₄)-Haloalkyl, (C₁-C₄)-Haloalkoxy, (C₃-C₆)-Cycloalkyl, Phenyl, (C₁-C₄)-Alkoxy, Cyano, (C₁-C₄)-Alkylthio, (C₁-C₄)-Alkylsulfinyl, (C₁-C₄)-Alkylsulfonyl, (C₁-C₄)-Alkoxycarbonyl oder (C₁-C₄)-Alkylcarbonyl;
   - n: 0, 1 oder 2 und
   - m: 1 oder 2 bedeuten.
   Insbesondere Verbindungen vom Typ der Acylsulfamoylbenzoesäureamide der nachfolgenden Formel (S-VII), die z.B. bekannt sind aus WO-A-99/16744, 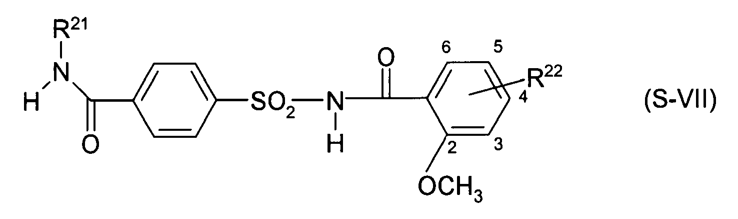 worin
   - R²¹ =: Cyclo-Propyl und R²² = H ist (S3-1 = 4-Cyclopropylaminocarbonyl-N-(2-methoxybenzoyl)benzolsulfonamid, Cyprosulfamide),
   - R²¹ =: Cyclo-Propyl und R²² = 5-Cl ist (S3-2),
   - R²¹ =: Ethyl und R²² = H ist (S3-3),
   - R²¹ =: iso-Propyl und R²² = 5-Cl ist (S3-4) und
   - R²¹ =: iso-Propyl und R²² = H ist (S3-5 =4-iso-propylaminocarbonyl-N-(2-methoxybenzoyl)benzolsulfonamid);
e) Verbindungen vom Typ der N-Acylsulfamoylphenylharnstoffe der Formel (S-VIII), die z.B. bekannt sind aus der EP-A-365484, 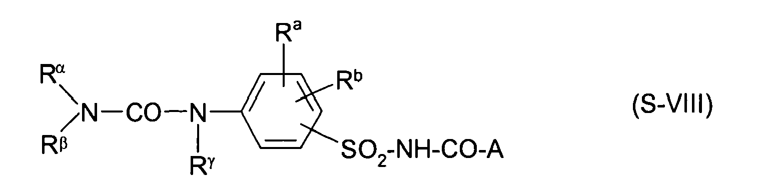
worin
- A: für einen Rest aus der Gruppe 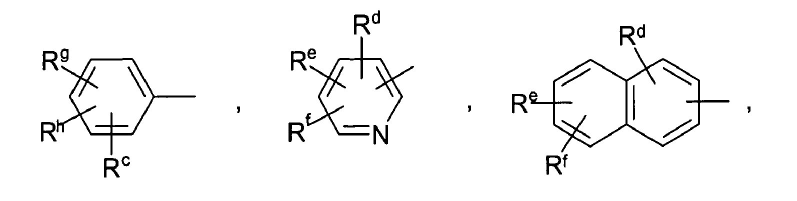 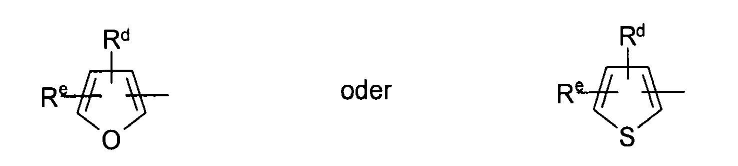
- R^{α} und R^{β}: unabhängig voneinander für Wasserstoff, C₁-C₈-Alkyl, C₃-C₈-Cycloalkyl, C₃-C₆-Alkenyl, C₃-C₆-Alkinyl, 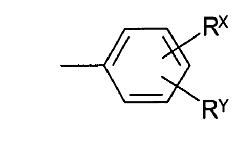 oder durch C₁-C₄-Alkoxy oder 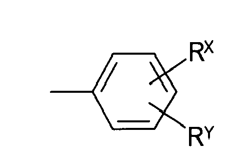 substituiertes C₁-C₄-Alkoxy, oder
- R^{α} und R^{β}: gemeinsam für eine C₄-C₆-Alkylenbrücke oder eine durch Sauerstoff, Schwefel, SO, SO₂, NH oder -N(C₁-C₄-Alkyl)- unterbrochene C₄-C₆-Alkylenbrücke,
- R^{γ}: für Wasserstoff oder C₁-C₄-Alkyl,
- R^{a} und R^{b}: unabhängig voneinander für Wasserstoff, Halogen, Cyan, Nitro, Trifluormethyl, C₁-C₄-Alkyl, C₁-C₄-Alkoxy, C₁-C₄-Alkylthio, C₁-C₄-Alkylsulfinyl, C₁-C₄-Alkylsulfonyl, -COOR^{j}, -CONR^{k}R^{m}, -CORⁿ, -SO₂NR^{k}R^{m} oder -OSO₂-C₁-C₄-Alkyl, oder R^{a} und R^{b} gemeinsam für eine C₃-C₄-Alkylenbrücke, die durch Halogen oder C₁-C₄-Alkyl substituiert sein kann, oder eine C₃-C₄-Alkenylenbrücke, die durch Halogen oder C₁-C₄-Alkyl substituiert sein kann, oder eine C₄-Alkadienylenbrücke, die durch Halogen oder C₁-C₄-Alkyl substituiert sein kann, und
- R^{g} und R^{h}: unabhängig voneinander für Wasserstoff, Halogen, C₁-C₄-Alkyl, Trifluormethyl, Methoxy, Methylthio oder-COOR^{j} stehen, wobei
- R^{c}: Wasserstoff, Halogen, C₁-C₄-Alkyl oder Methoxy,
- R^{d}: Wasserstoff, Halogen, Nitro, C₁-C₄-Alkyl, C₁-C₄-Alkoxy, C₁-C₄-Alkylthio, C₁-C4-Alkylsulfinyl, C₁-C₄-Alkylsulfonyl, -COOR^{j} oder -CONR^{k}R^{m},
- R^{e}: Wasserstoff, Halogen, C₁-C₄-Alkyl, -COOR^{j}, Trifluormethyl oder Methoxy, oder R^{d} und R^{e} gemeinsam für eine C₃-C₄-Alkylenbrücke,
- R^{f}: Wasserstoff, Halogen oder C₁-C₄-Alkyl ,
- R^{X} und R^{Y}: unabhängig voneinander Wasserstoff, Halogen, C₁-C₄-Alkyl, C₁-C₄-Alkoxy, C₁-C₄-Alkylthio, -COOR⁴, Trifluormethyl, Nitro oder Cyan,
- R^{j}, R^{k} und R^{m}: unabhängig voneinander Wasserstoff oder C₁-C₄-Alkyl,
- R^{k} und R^{m}: gemeinsam eine C₄-C₆-Alkylenbrücke oder eine durch Sauerstoff, NH oder -N(C₁-C₄-Alkyl)- unterbrochene C₄-C₆-Alkylenbrücke, und
- Rⁿ: C₁-C₄-Alkyl, Phenyl oder durch Halogen, C₁-C₄-Alkyl, Methoxy, Nitro oder Trifluormethyl substituiertes Phenyl bedeuten;
vorzugsweise Safener der Formel (S-VIII) sind
1-[4-(N-2-Methoxybenzoylsulfamoyl)phenyl]-3-methylharnstoff,
1-[4-(N-2-Methoxybenzoylsulfamoyl)phenyl]-3,3-dimethylharnstoff,
1-[4-(N-4,5-Dimethylbenzoylsulfamoyl)phenyl]-3-methylharnstoff,
1-[4-(N-Naphthoylsulfamoyl)phenyl]-3,3-dimethylharnstoff,
einschließlich der Stereoisomeren und der in der Landwirtschaft gebräuchlichen Salze.

Sofern es im Einzelnen nicht anders definiert wird, gelten für die Reste in den Formeln zu (S-II) bis (S-VIII) im Allgemeinen die folgenden Definitionen.
Die Reste Alkyl, Alkoxy, Haloalkyl, Haloalkoxy, Alkylamino und Alkylthio sowie die entsprechenden ungesättigten und/oder substituierten Reste können im Kohlenstoffgerüst jeweils geradkettig oder verzweigt sein.
Alkylreste, auch in den zusammengesetzten Bedeutungen wie Alkoxy, Haloalkyl usw. haben vorzugsweise 1 bis 4 C-Atome und, bedeuten z.B. Methyl, Ethyl, n- oder i-Propyl, n-, i-, t- oder 2-Butyl. Alkenyl- und Alkinylreste haben die Bedeutung der den Alkylresten entsprechenden möglichen ungesättigten Reste; Alkenyl bedeutet z.B. Allyl, 1-Methylprop-2-en-1-yl, 2-Methyl-prop-2-en-1-yl, But-2-en-1-yl, But-3-en-1-yl, 1-Methyl-but-3-en-1-yl und 1-Methyl-but-2-en-1-yl. Alkinyl bedeutet z.B.

Propargyl, But-2-in-1-yl, But-3-in-1-yl, 1-Methyl-but-3-in-1-yl. "(C₁-C₄)-Alkyl" ist die Kurzschreibweise für Alkyl mit 1 bis 4 C-Atomen; entsprechendes gilt für andere allgemeine Restedefinitionen mit in Klammern angegebenen Bereichen für die mögliche Anzahl von C-Atomen.
Cycloalkyl bedeutet bevorzugt einen cyclischen Alkylrest mit 3 bis 8, vorzugsweise 3 bis 7, besonders bevorzugt 3 bis 6 C-Atomen, beispielsweise Cyclopropyl, Cyclobutyl, Cyclopentyl und Cyclohexyl. Cycloalkenyl und Cycloalkinyl bezeichnen entsprechende ungesättigte Verbindungen.
Halogen bedeutet Fluor, Chlor, Brom oder Iod. Haloalkyl, Haloalkenyl und Haloalkinyl bedeuten durch Halogen, vorzugsweise durch Fluor, Chlor und/oder Brom, insbesondere durch Fluor oder Chlor, teilweise oder vollständig substituiertes Alkyl, Alkenyl oder Alkinyl, z.B. CF₃, CHF₂, CH₂F, CF₂CF₃, CH₂CHFCl, CCl₃, CHCl₂, CH₂CH₂Cl. Haloalkoxy ist z.B. OCF₃, OCHF₂, OCH₂F, OCF₂CF₃, OCH₂CF₃ und OCH₂CH₂Cl. Entsprechendes gilt für sonstige Halogen substituierte Reste.
Ein Kohlenwasserstoffrest kann ein aromatischer oder ein aliphatischer Kohlenwasserstoffrest sein, wobei ein aliphatischer Kohlenwasserstoffrest im allgemeinen ein geradkettiger oder verzweigter gesättigter oder ungesättigter Kohlenwasserstoffrest ist, vorzugsweise mit 1 bis 18, besonders bevorzugt 1 bis 12 C-Atomen, z.B. Alkyl, Alkenyl oder Alkinyl.
Vorzugsweise bedeutet aliphatischer Kohlenwasserstoffrest Alkyl, Alkenyl oder Alkinyl mit bis zu 12 C-Atomen; entsprechendes gilt für einen aliphatischen Kohlenwasserstoffrest in einem Kohlenwasserstoffoxyrest.
Aryl ist im allgemeinen ein mono-, bi- oder polycyclisches aromatisches System mit vorzugsweise 6-20 C-Atomen, bevorzugt 6 bis 14 C-Atomen, besonders bevorzugt 6 bis 10 C-Atomen, z.B. Phenyl, Naphthyl, Tetrahydronaphthyl, Indenyl, Indanyl, Pentalenyl und Fluorenyl, besonders bevorzugt Phenyl.
Heterocyclischer Ring, heterocyclischer Rest oder Heterocyclyl bedeutet ein mono-, bi- oder polycyclisches Ringsystem, das gesättigt, ungesättigt und/oder aromatisch ist und eine oder mehrere, vorzugsweise 1 bis 4, Heteroatome, vorzugsweise aus der Gruppe N, S und O, enthält.
Bevorzugt sind gesättigte Heterocyclen mit 3 bis 7 Ringatomen und einem oder zwei Heteroatomen aus der Gruppe N, O und S, wobei die Chalcogene nicht benachbart sind. Besonders bevorzugt sind monocyclische Ringe mit 3 bis 7 Ringatomen und einem Heteroatom aus der Gruppe N, O und S, sowie Morpholin, Dioxolan, Piperazin, Imidazolin und Oxazolidin. Ganz besonders bevorzugte gesättigte Heterocyclen sind Oxiran, Pyrrolidon, Morpholin und Tetrahydrofuran.
Bevorzugt sind auch teilweise ungesättigte Heterocyclen mit 5 bis 7 Ringatomen und einem oder zwei Heteroatomen aus der Gruppe N, O und S. Besonders bevorzugt sind teilweise ungesättigte Heterocyclen mit 5 bis 6 Ringatomen und einem Heteroatom aus der Gruppe N, O und S. Ganz besonders bevorzugte teilweise ungesättigte Heterocyclen sind Pyrazolin, Imidazolin und Isoxazolin.
Ebenso bevorzugt ist Heteroaryl, z.B. mono- oder bicyclische aromatische Heterocyclen mit 5 bis 6 Ringatomen, die ein bis vier Heteroatome aus der Gruppe N, O, S enthalten, wobei die Chalcogene nicht benachbart sind. Besonders bevorzugt sind monocyclische aromatische Heterocyclen mit 5 bis 6 Ringatomen, die ein Heteroatom aus der Gruppe, N, O und S enthalten, sowie Pyrimidin, Pyrazin, Pyridazin, Oxazol, Thiazol, Thiadiazol, Oxadiazol, Pyrazol, Triazol und Isoxazol.
Ganz besonders bevorzugt sind Pyrazol, Thiazol, Triazol und Furan.
Substituierte Reste, wie substituierte Kohlenwasserstoffreste, z.B. substituiertes Alkyl, Alkenyl, Alkinyl, Aryl wie Phenyl und Arylalkyl wie Benzyl, oder substituiertes Heterocyclyl, bedeuten einen vom unsubstituierten Grundkörper abgeleiteten substituierten Rest, wobei die Substituenten vorzugsweise einen oder mehrere, vorzugsweise 1, 2 oder 3, im Falle von Cl und F auch bis zur maximal möglichen Anzahl, Substituenten aus der Gruppe Halogen, Alkoxy, Haloalkoxy, Alkylthio, Hydroxy, Amino, Nitro, Carboxy, Cyano, Azido, Alkoxycarbonyl, Alkylcarbonyl, Formyl, Carbamoyl, Mono- und Dialkylaminocarbonyl, substituiertes Amino wie Acylamino, Mono- und Dialkylamino und Alkylsulfinyl, Haloalkylsulfinyl, Alkylsulfonyl, Haloalkylsulfonyl und, im Falle cyclischer Reste, auch Alkyl und Haloalkyl sowie den genannten gesättigten kohlenwasserstoffhaltigen Substituenten entsprechende ungesättigte aliphatische Substituenten, vorzugsweise Alkenyl, Alkinyl, Alkenyloxy, Alkinyloxy, bedeuten. Bei Resten mit C-Atomen sind solche mit 1 bis 4 C-Atomen, insbesondere 1 oder 2 C-Atomen, bevorzugt. Bevorzugt sind in der Regel Substituenten aus der Gruppe Halogen, z.B. Fluor oder Chlor, (C₁-C₄)Alkyl, vorzugsweise Methyl oder Ethyl, (C₁-C₄)Haloalkyl, vorzugsweise Trifluormethyl, (C₁-C₄)Alkoxy, vorzugsweise Methoxy oder Ethoxy, (C₁-C₄)Haloalkoxy, Nitro und Cyano. Besonders bevorzugt sind dabei die Substituenten Methyl, Methoxy und Chlor.
Mono- oder disubstituiertes Amino bedeutet einen chemisch stabilen Rest aus der Gruppe der substituierten Aminoreste, welche beispielsweise durch einen oder zwei gleiche oder verschiedene Reste aus der Gruppe Alkyl, Alkoxy, Acyl und Aryl N-substituiert sind; vorzugsweise Monoalkylamino, Dialkylamino, Acylamino, Arylamino, N-Alkyl-N-Arylamino sowie N-Heterocyclen. Dabei sind Alkylreste mit 1 bis 4 C-Atomen bevorzugt. Aryl ist dabei vorzugsweise Phenyl. Substituiertes Aryl ist dabei vorzugsweise substituiertes Phenyl. Für Acyl gilt dabei die weiter unten genannte Definition, vorzugsweise (C₁-C₄)Alkanoyl. Entsprechendes gilt für substituiertes Hydroxylamino oder Hydrazino.
Gegebenenfalls substituiertes Phenyl ist vorzugsweise Phenyl, das unsubstituiert oder ein- oder mehrfach, vorzugsweise bis zu dreifach, bei Halogen wie Cl und F auch bis zu fünffach, durch gleiche oder verschiedene Reste aus der Gruppe Halogen, (C₁-C₄)Alkyl, (C₁-C₄)Alkoxy, (C₁-C₄)Haloalkyl, (C₁-C₄)Haloalkoxy und Nitro substituiert ist, z.B. o-, m- und p-Tolyl, Dimethylphenyle, 2-, 3- und 4-Chlorphenyl, 2-, 3- und 4-Trifluor- und -Trichlorphenyl, 2,4-, 3,5-, 2,5- und 2,3-Dichlorphenyl, o-, mund p-Methoxyphenyl.
Ein Acylrest bedeutet den Rest einer organischen Säure mit vorzugsweise bis zu 6 C-Atomen, z.B. den Rest einer Carbonsäure und Reste davon abgeleiteter Säuren wie der Thiocarbonsäure, gegebenenfalls N-substituierter Iminocarbonsäuren, oder der Rest von Kohlensäuremonoestern, gegebenenfalls N-substituierter Carbaminsäuren, Sulfonsäuren, Sulfinsäuren, Phosphonsäuren, Phosphinsäuren. Acyl bedeutet beispielsweise Formyl, Alkylcarbonyl, wie (C₁-C₄-Alkyl)-carbonyl, Phenylcarbonyl, wobei der Phenylring substituiert sein kann, z.B. wie oben für Phenyl angegeben, oder Alkyloxycarbonyl, Phenyloxycarbonyl, Benzyloxycarbonyl, Alkylsulfonyl, Alkylsulfinyl oder N-Alkyl-1-iminoalkyl.
Von den Formeln (S-II) bis (S-VIII) umfasst sind auch alle Stereoisomeren, welche die gleiche topologische Verknüpfung der Atome aufweisen, und deren Gemische. Solche Verbindungen enthalten ein oder mehrere asymmetrische C-Atome oder auch Doppelbindungen, die in den allgemeinen Formeln nicht gesondert angegeben sind. Die durch ihre spezifische Raumform definierten möglichen Stereoisomeren, wie Enantiomere, Diastereomere, Z- und E-Isomere, können nach üblichen Methoden aus Gemischen der Stereoisomeren erhalten oder auch durch stereoselektive Reaktionen in Kombination mit dem Einsatz von stereochemisch reinen Ausgangsstoffen hergestellt werden.

Die Verbindungen der Formel (S-II) sind z.B. aus EP-A-0333131 (ZA-89/1960), EP-A-0269806 (US 4,891,057), EP-A-0346620 (AU-A-89/34951), EP-A-0174562, EP-A-0346620 (WO-A-91/08202), WO-A-91/07874 oder WO-A-95/07897 (ZA 94/7120) und der dort zitierten Literatur bekannt oder können nach oder analog den dort beschriebenen Verfahren hergestellt werden. Die Verbindungen der Formel (S-III) sind aus EP-A-0086750, EP-A-094349 (US 4,902,340), EP-A-0191736 (US 4,881,966) und EP-A-0492366 und dort zitierter Literatur bekannt oder können nach oder analog den dort beschriebenen Verfahren hergestellt werden. Einige Verbindungen sind ferner in EP-A-0582198 und WO-A-02/34048 beschrieben. Die Verbindungen der Formel (S-IV) sind aus zahlreichen Patentanmeldungen bekannt, beispielsweise US 4,021,224 und US 4,021,229. Verbindungen der Untergruppe b) sind weiterhin aus CN-A-87/102789, EP-A-365484 sowie aus "The Pesticide Manual", 11. bis 13. Auflage, British Crop Protection Council and the Royal Society of Chemistry (1997), bekannt. Die Verbindungen der Untergruppe c) sind in der WO-A-97/45016, die der Untergruppe d) in der WO-A-99/16744 (insbesondere in EP-A-365484) beschrieben. Die zitierten Schriften enthalten ausführliche Angaben zu Herstellungsverfahren und Ausgangsmaterialien und nennen bevorzugte Verbindungen. Auf diese Schriften wird ausdrücklich Bezug genommen, sie gelten durch Zitat als Bestandteil dieser Beschreibung.

Bevorzugt sind Safener (Komponente b) mit Schmelzpunkten ≤ (kleiner gleich) 150 °C, besonders bevorzugt ≤100 °C, ganz besonders bevorzugt ≤ 75 °C. Daneben sind Safener (Komponente b) bevorzugt, die geeignet sind für den Einsatz in Getreide, wie beispielsweise Weizen, Gerste, Roggen, Hafer, Hirse, Reis, Mais.

Besonders bevorzugt kommen als Safener (Komponente b), die gegebenenfalls in den erfindungsgemäßen Formulierungen enthalten sein können, unter anderem in Frage: 4-Dichloracetyl-1-oxa-4-aza-spiro[4.5]-decan (AD-67), 1-Dichloracetyl-hexahydro-3,3,8a-trimethylpyrrolo[1,2-a]-pyrimidin-6(2H)-on (Dicyclonon, BAS-145138), 4-Dichloracetyl-3,4-dihydro-3-methyl-2H-1,4-benzoxazin (Benoxacor), 5-Chlor-chinolin-8-oxy-essigsäure-(1-methyl-hexylester) (Cloquintocet-mexyl), α-(Cyanomethoxyimino)-phenylacetonitril (Cyometrinil), 2,2-Dichlor-N-(2-oxo-2-(2-propenylamino)-ethyl)-N-(2-propenyl)-acetamid (DKA-24), 2,2-Dichlor-N,N-di-2-propenyl-acetamid (Dichlormid), N-(4-Methyl-phenyl)-N'-(1-methyl-1-phenyl-ethyl)-harnstoff (Dymron), 4,6-Dichlor-2-phenyl-pyrimidin (Fenclorim), 1-(2,4-Dichlorphenyl)-5-trichlormethyl-1 H-1,2,4-triazol-3-carbonsäure-ethylester (Fenchlorazolethyl), 2-Chlor-4-trifluormethyl-thiazol-5-carbonsäure-phenylmethylester (Flurazole), 4-Chlor-N-(1,3-dioxolan-2-yl-methoxy)-α-trifluor-acetophenonoxim (Fluxofenim), 3-Dichloracetyl-5-(2-furanyl)-2,2-dimethyl-oxazolidin (Furilazole, MON-13900), Ethyl-4,5-dihydro-5,5-diphenyl-3-isoxazolcarboxylat (Isoxadifen-ethyl), Diethyl-1-(2,4-dichlorphenyl)-4,5-dihydro-5-methyl-1 H-pyrazol-3,5-dicarboxylat (Mefenpyr-diethyl), 2-Dichlormethyl-2-methyl-1,3-dioxolan (MG-191), 1,8-Naphthalsäureanhydrid, α-(1,3-Dioxolan-2-yl-methoximino)-phenylacetonitril (Oxabetrinil), 2,2-Dichlor-N-(1,3-dioxolan-2-yl-methyl)-N-(2-propenyl)-acetamid (PPG-1292), 3-Dichloracetyl-2,2-dimethyl-oxazolidin (R-28725), 3-Dichloracetyl-2,2,5-trimethyl-oxazolidin (R-29148), 1 -(2-Chlor-phenyl)-5-phenyl-1 H-pyrazol-3-carbonsäure-methylester, 4-Cyclopropylaminocarbonyl-N-(2-methoxybenzoyl)benzolsulfonamid (Cyprosulfamide), 4-iso-propylaminocarbonyl-N-(2-methoxybenzoyl)benzolsulfonamid und N-(2-Methoxy-benzoyl)-4-[(methylamino-carbonyl)-amino]-benzolsulfonamid.

Ganz besonders bevorzugt sind Mefenpyr-diethyl, Isoxadifen-ethyl, 4-Cyclopropylaminocarbonyl-N-(2-methoxybenzoyl)benzolsulfonamid (Cyprosulfamide), 4-iso-propylaminocarbonyl-N-(2-methoxybenzoyl)benzolsulfonamid, insbesondere besonders bevorzugt ist Mefenpyr-diethyl.

Der Anteil der Safener (Komponente b), die in den erfindungsgemäßen Formulierungen enthalten sind, kann 0,01 - 50 Gew.-%, bevorzugt 0,5 - 25 Gew.-%, besonders bevorzugt 2 - 20 Gew.-%, ganz besonders bevorzugt 5 - 17 Gew.-% betragen.

Geeignete Lösungsmittel (Komponente c) für die erfindungsgemäßen Formulierungen können ausgewählt werden aus der Gruppe der aromatischen und aliphatischen Kohlenwasserstoffe, Ester und Amide organischer und anorganischer Säuren, aromatische, aliphatische und cycloaliphatische Ketone und Alkohole.

Typische Vertreter geeigneter Lösungsmittel sind unter anderem ®Solvesso-Typen (aromatischer Kohlenwasserstoff), ®Essobayol (aliphatischer Kohlenwasserstoff), ®Exxate (Ester organischer Säuren), ®Hallcomide (Amide organischer Säuren, Acetonphenon (aromatisches Keton), Methylisobutylketon (aliphatisches Keton), @Anon (Cyclohexanon: Cycloaliphatisches Keton).

Bevorzugt sind Lösungsmittel aus der Gruppe der aromatischen und aliphatischen Kohlenwasserstoffe, wie z.B. ®Solvesso-Typen (aromatische Kohlenwasserstoffe), besonders bevorzugt aromatische Kohlenwasserstoffe, wie ®Solvesso 200 ND (alkyliertes Naphthalin).

Der Anteil der Lösungsmittel (Komponente c) in den erfindungsgemäßen Formulierungen kann 0,01 - 50 Gew.-%, bevorzugt 0,5 - 25 Gew.-%, besonders bevorzugt 2 - 20 Gew.-%, ganz besonders bevorzugt 5 - 17 Gew.-% betragen.

In den erfindungsgemäßen Formulierungen werden ein oder mehrere Trägermaterialien (Komponente d) verwendet, ausgewählt aus einer oder mehreren der Gruppen: Trägerstoffe mit niedriger Saugfähigkeit (Komponente d-1) und Trägerstoffe mit hoher Saugfähigkeit (Komponente d-2).

Der Anteil der Trägermaterialien (Komponente d) in den erfindungsgemäßen Formulierungen kann 0,1 - 90 Gew.-% , bevorzugt 10 - 80 Gew.-%, besonders bevorzugt 15 - 50 Gew.-%, ganz besonders bevorzugt 25 - 45 Gew.-% betragen.

Die Trägerstoffe mit niedriger Saugfähigkeit (Komponente d-1) in den erfindungsgemäßen Formulierungen können einer Gruppe entnommen werden, welche Mineralien, Carbonate, Sulfate und Phosphate von Erdalkali- und Erdmetallen, wie Calciumcarbonat, polymere Kohlenhydrate, Gerüstsilikate, wie Fällungskieselsäuren mit niedriger Saugfähigkeit, und natürliche Gerüstsilikate, wie Kaolin, umfasst. Daneben sind sie gekennzeichnet durch eine Aufnahmefähigkeit von weniger als 200 g Dibutylphthalat pro 100 g Trägermaterial.

Typische Vertreter geeigneter Trägerstoffe (Komponente d-1) sind unter anderem ®Agsorb LVM-GA (Attapulgit), ®Harborlite 300 (Perlit), ®Collys HV (modifizierte Stärke), ®Omya-Kreide (Calciumcarbonat), ®Extrusil (Fällungskieselsäure), ®Kaolin Tec 1 (Kaolin, Aluminiumhydrosilicat), ®Steamic 00S (Talk, Magnesiumsilicat). Bevorzugt sind hier natürliche Gerüstsilikate und Calciumcarbonat-Typen wie ®Omya-Kreide (Calciumcarbonat), ®Kaolin Tec1 (Kaolin) und ®Harborlite 300 (Perlit), besonders bevorzugt natürliche Gerüstsilikate wie ®Kaolin Tec 1 (Kaolin, Aluminiumhydrosilicat) und ®Harborlite 300 (Perlit).

Der Anteil der Trägerstoffe mit niedriger Saugfähigkeit (Komponente d-1) in den erfindungsgemäßen Formulierungen kann 0,5 - 85 Gew.-%, bevorzugt 7 - 70 Gew.-%, besonders bevorzugt 15 - 35 Gew.-% betragen.

Geeignete Trägerstoffe mit hoher Saugfähigkeit (Komponente d-2) in den erfindungsgemäßen Formulierungen sind gekennzeichnet durch eine Aufnahmefähigkeit von wenigstens 200 g Dibutylphthalat pro 100 g Trägermaterial und können aus dieser Gruppe ausgewählt werden.

Typische Vertreter hierfür geeigneter Trägerstoffe (Komponente d-2) sind unter anderem ®Calflo E (Calcium-Silikat) und ®Sipernat-Typen (synthetische Fällungskieselsäure von hoher Saugfähigkeit).
Bevorzugt sind Calcium-Silikat, wie ®Calflo E, und Fällungskieselsäure, wie ®Sipernat 50S.

Der Anteil der Trägerstoffe mit hoher Saugfähigkeit (Komponente d-2) in den erfindungsgemäßen Formulierungen kann 0,1 - 90 Gew.-%, bevorzugt 0,3 - 20 Gew.-%, besonders bevorzugt 1-17 Gew.-%, ganz besonders bevorzugt 3 - 13 Gew.-% betragen.

In einer besonderen Ausführungsform der Erfindung bestehen die Trägermaterialien (Komponente d) aus einer Mischung von mindestens einem Trägerstoffe mit niedriger Saugfähigkeit (Komponente d-1) und mindestens einem Trägerstoffe mit hoher Saugfähigkeit (Komponente d-2).

In den erfindungsgemäßen Formulierungen werden ein oder mehrere übliche Hilfs-und Zusatzstoffe (Komponente e) verwendet, ausgewählt aus einer oder mehreren der Gruppen: Emulgatoren (Komponente e-1), Antischaummittel (Komponente e-2), Netzmittel (Komponente e-3) und Dispergatoren (Komponente e-4).

Die Einteilung der Komponente (e) in Emulgatoren, Netzmittel und Dispergatoren stellt keine Beschränkung der Verwendung dar, da bekannt ist, dass z.B. Dispergatoren auch 'netzende' Eigenschaften aufweisen können und z.B. Netzmittel auch dispergierend wirken können.

Geeignete übliche Hilfs- und Zusatzstoffe (Komponente e) können ausgewählt werden aus einer oder mehreren der Gruppen der ionischen, neutralen und/oder zwitterionischen Tenside, ebenso wie aus den Gruppen der neutral bis (schwach) alkalischen Tenside (pH 6 -14).

Geeignete Emulgatoren (Komponente e-1) können anionischer und/ oder nichtionischer Natur sein und werden ausgewählt aus der Gruppe umfassend: Salze von alkylierten aromatischen Sulfonsäuren, gegebenenfalls alkylierten Copolymerisaten von Alkylenoxiden, wie Ethylen- und Propylenoxid (EO/PO), ethoxyliertes Ricinusöl, fettacyliertes Sorbitanethoxylat, Mono- und Diglyceride von Fettsäuren und deren Salze, Fettsäuren und deren Salze, Reaktionsprodukte von gegebenenfalls aliphatisch oder aromatisch substituierten Phenolen mit Alkylenoxiden, sowie die gegebenenfalls partiellen Ester dieser Tenside mit organischen Säuren wie Essig- oder Citronensäure, oder anorganischen Säuren wie Schwefel- oder Phosphorsäure.

Typische Vertreter geeigneter Emulgatoren sind unter anderem ®Phenylsulfonat CA (Ca-Dodecylbenzolsulfonat), ®Soprophor-Typen (gegebenenfalls veresterte Derivate von Tristyrylphenol-Ethoxylaten), ®Emulsogen 3510 (alkyliertes EO/PO-Copolymerisat), ®Emulsogen EL 400 (ethoxyliertes Ricinusöl), ®Tween-Typen (fettacylierte Sorbitan-Ethoxylate), ®Calsogen AR 100 (Ca-Dodecylbenzolsulfonat). Bevorzugt sind Kombinationen aus Salzen alkylierter aromatischer Sulfonsäuren, wie ®Phenylsulfonat Ca und/oder ®Calsogen AR 100, mit alkylierten Copolymerisaten aus Ethylen- und Propylenoxid, wie ®Emulsogen 3510.
Besonders bevorzugt sind Kombinationen aus Salzen der Dodecylbenzolsulfonsäure, wie ®Calsogen AR 100 mit alkyliertem Copolymerisat aus Ethylen- und Propylenoxid, wie ®Emulsogen 3510.

Der Anteil der Emulgatoren (Komponente e-1) in den erfindungsgemäßen Formulierungen kann 0,001 - 25 Gew.-%, bevorzugt 0,005 - 10 Gew.-%, besonders bevorzugt 0,05 - 6 Gew.-%, ganz besonders bevorzugt 0,5 - 3,5 Gew.-% betragen.

Geeignete Antischaummittel (Komponente e-2) können ausgewählt werden aus der Gruppe der Ester der Phosphorsäure mit niederen Alkoholen, C6-C10-Alkohole, Silicontenside (Suspoemulsionen von hydrophobisierten Kieselsäurepartikeln in wässrigen Emulsionskonzentraten auf der Basis flüssiger Silicontenside), wie Polydimethylsiloxan, sowie deren Absorbate an festes Trägermaterial.

Typische Vertreter geeigneter Antischaummittel sind unter anderem ®Rhodorsil 432 (Silicontensid), Butylphosphat, iso-Butylphosphat, n-Octanol, ®Wacker ASP15 (Polydimethylsiloxan, an festem Träger absorbiert), ®Antischaum-Mittel SE 2 (Polydimethylsiloxan).

Bevorzugt sind Suspoemulsionen von hydrophobisierten Kieselsäurepartikeln in wässrigen Emulsionskonzentraten auf der Basis flüssiger Silicontenside, wie ®Antischaum-Mittel SE (Polydimethylsiloxan), und feste Antischaummittel, wie ®Wacker ASP 15 (Polydimethylsiloxan).

Der Anteil der Antischaummittel (Komponente e-2) in den erfindungsgemäßen Formulierungen kann 0,1 - 10 Gew.-%, bevorzugt 0,3 - 5 Gew.-%, besonders bevorzugt 0,5 - 3 Gew.-% betragen.

Als geeignete Netzmittel (Komponente e-3) können feste Tenside, anionische und/oder zwitterionische Tenside, Sulfonate (Sulfosuccinate), Sulfate, Phosphonate, Phosphate und Carboxylate, aber auch alkalische Tenside (z.B. ®Synperonic T-Typen) verwendet werden. Sie können ausgewählt werden aus der Gruppe fester, d.h. bei Raumtemperatur nicht flüssiger Netzmittel, mit z.B. wachsartiger, amorpher oder kristalliner Beschaffenheit, bevorzugt aus der Gruppe der Reaktionsprodukte von Alkylenoxiden mit Alkylenpolyaminen, der Naphthalinsulfonsäuren und der Gruppe der Sulfobernsteinsäure-Derivate sowie den Salzen dieser Gruppen, die einerseits Mono- und Di-Ester der Sulfobernsteinsäure sowie deren Salze (Sulfosuccinate) enthalten können und andererseits alkylierte Naphthalinsulfonsäuren und deren Salze enthalten können.

Typische Vertreter geeigneter Netzmittel sind unter anderem ®Synperonic T-Typen (Blockpolymerisaten von Propylenoxid und Ethylenoxid auf Ethylendiamin), ®Aerosol OTB (Dioctylsulfosuccinat), ®Morwet EFW (alkylierte Naphthalinsulfonate), ®Nekal BX (alkylierte Naphthalinsulfonate), ®Galoryl MT 804 (alkylierte Naphthalinsulfonate).

Bevorzugt sind hier Blockpolymerisate von Propylenoxid und Ethylenoxid auf Ethylendiamin (®Synperonic T 905), die Salze der alkylierten Naphthalinsulfonsäuren und die Salze der Dioctylsulfobernsteinsäure, besonders bevorzugt die Natriumsalze alkylierter Naphthalinsulfonate wie z.B. ®Morwet EFW, und die Natriumsalze der Dioctylsulfobernsteinsäure wie z.B. ®Aerosol OTB, und Blockpolymerisat von Propylenoxid und Ethylenoxid auf Ethylendiamin, wie z.B. ®Synperonic T 905.

Der Anteil der Netzmittel (Komponente e-3) in den erfindungsgemäßen Formulierungen kann 0,1 - 50 Gew.-%, vorzugsweise 0,25 - 30 Gew.-%, besonders bevorzugt 0,5 - 30 Gew.-% betragen.

Geeignete Dispergatoren (Komponente e-4) können ausgewählt werden aus der Gruppe ethoxylierte Triarylphenole, deren gegebenenfalls partielle Ester mit Phosphorsäure, Ligninsulfonsäuren, Kondensationsprodukte aromatischer, gegebenenfalls mehrkerniger, Sulfonsäuren (Naphthalinsulfonsäure) mit Formaldehyd, Polymerisate von gegebenenfalls alkylierten Acrylsäuren (Beispiel alkalischer Dispergatoren), Kondensationsprodukte von gegebenenfalls mehrkernigen Phenolen mit Formaldehyd und Na-Sulfit, Sulfonsäuren mehrkerniger Aromaten, sowie die Alkali-, Erdkali- und Ammoniumsalze diese Stoffe.

Typische Vertreter geeigneter Dispergatoren sind unter anderem ®Soprophor BSU (phosphatiertes Triarylphenolethoxylat), ®Borresperse NA (Ligninsulfonat), ®Rapidaminreserve D (Kondensationsprodukt Phenol mit Na-Sulfit und Formaldehyd), ®Galoryl DT-Marken (Kondensationsprodukt aromatischer Sulfonsäuren mit Formaldehyd), ®Morwet D425 (Kondensationsprodukt aus Naphthalinsulfonsäure und Formaldehyd).

Bevorzugt sind Kondensationsprodukte von aromatischen Sulfonsäuren mit Formaldehyd und deren Salze, besonders bevorzugt sind die Natriumsalze von Naphthalinsulfonsäuren mit Formaldehyd, ®wie Galoryl DT505 und ®Morwet D425 (beides Kondensationsprodukte aus Naphthalinsulfonsäure und Formaldehyd).

Der Anteil der Dispergatoren (Komponente e-4) kann 1 - 50 Gew.-%, bevorzugt 5 - 30 Gew.-%, besonders bevorzugt 10 - 20 Gew.-% betragen.

Als optionale agrochemische Wirkstoffe (Komponente f) können beispielsweise von den Komponenten (a) und (b) verschiedene agrochemische Wirkstoffe wie Herbizide, Fungizide, Insektizide, Pflanzenwachstumsregulatoren und dergleichen enthalten sein.

Geeignete von den Komponenten (a) und (b) verschiedene Wirkstoffe sind vorzugsweise herbizide Wirkstoffe. Zu nennen wären hier Herbizide aus der Gruppe der Carbamate, Thiocarbamate, Halogenacetanilide, substituierte Phenoxy-, Naphthoxy- und Phenoxyphenoxycarbonsäure-Derivate sowie Heteroaryloxyphenoxyalkancarbonsäure-Derivate, wie Chinolyloxy-, Chinoxalyl-oxy-, Pyridyloxy-, Benzoxazolyloxy- und Benzthiazolyloxyphenoxyalkan-carbonsäureester, Cyclohexandionabkömmlinge, Phosphor-haltige Herbizide, z.B. vom Glufosinate-Typ oder vom Glyphosate-Typ, sowie S-(N-Aryl-N-alkylcarbamoylmethyl)-dithiophosphorsäureester. Speziell beispielsweise:
A) Herbizide vom Typ der Phenoxyphenoxy- und Heteroaryloxyphenoxycarbonsäure-Derivate, wie
A1) Phenoxyphenoxy- und Benzyloxyphenoxy-carbonsäure-Derivate, z.B. 2-(4-(2,4-Dichlorphenoxy)-phenoxy)-propionsäuremethylester (Diclofop-methyl), 2-(4-(4-Brom-2-chlorphenoxy)phenoxy)propionsäuremethylester (DE-A-2601548), 2-(4-(4-Brom-2-fluorphenoxy)phenoxy)propionsäuremethylester (US 4,808,750), 2-(4-(2-Chlor-4-trifluormethylphenoxy)phenoxy)propionsäuremethylester (DE-A-2433067), 2-(4-(2-Fluor-4-trifluormethylphenoxy)phenoxy)propionsäuremethylester (US 4,808,750), 2-(4-(2,4-Dichlorbenzyl)phenoxy)propionsäuremethylester (DE-A-2417487), 4-(4-(4-Trifluormethylphenoxy)phenoxy)pent-2-en-säureethylester, 2-(4-(4-Trifluormethylphenoxy)phenoxy)propionsäuremethylester (DE-A-2433067);
A2) "Einkernige" Heteroaryloxyphenoxy-alkancarbonsäure-Derivate, z.B. 2-(4-(3,5-Dichlorpyridyl-2-oxy)phenoxy)propionsäureethylester (EP-A-0002925), 2-(4-(3,5-Dichlorpyridyl-2-oxy)phenoxy)propionsäurepropargylester (EP-A-0003114), 2-(4-(3-Chlor-5-trifluormethyl-2-pyridyloxy)phenoxy)propionsäure-methylester (EP-A-0003890), 2-(4-(3-Chlor-5-trifluormethyl-2-pyridyloxy)phenoxy)propionsäureethylester (EP-A-0003890), 2-(4-(5-Chlor-3-fluor-2-pyridyloxy)phenoxy)propionsäurepropargylester (EP-A-0191736), 2-(4-(5-Trifluormethyl-2-pyridyloxy)phenoxy)propionsäurebutylester (Fluazifop-butyl);
A3) "Zweikernige" Heteroaryloxyphenoxy-alkancarbonsäure-Derivate, z.B. 2-(4-(6-Chlor-2-chinoxalyloxy)phenoxy)propionsäuremethylester und -ethylester (Quizalofopmethyl und Quizalofopethyl), 2-(4-(6-Fluor-2-chinoxalyloxy)phenoxy)propionsäuremethylester (s. J. Pest. Sci. Vol. 10, 61 (1985)), 2-(4-(6-Chlor-2-chinoxalyloxy)phenoxy)propionsäure-2-isopropylidenaminooxy-ethylester (Propaquizafop), 2-(4-(6-Chlorbenzoxazol-2-yl-oxy)phenoxy)propionsäureethylester (Fenoxaprop-ethyl) und dessen D(+) Isomer (Fenoxaprop-P-ethyl, EX) und 2-(4-(6-Chlorbenzthiazol-2-yloxy)phenoxy)propionsäureethylester (DE-A-2640730), 2-(4-(6-Chlorchinoxalyloxy)phenoxy)propionsäure-tetrahydro-2-furylmethylester (EP-A-0323727);
A4) Phenoxycarbonsäure-Derivate, wie 2,4-D, 2,4-DP, 2,4-DB, CMPP und MCPA und deren Ester und Salze;
B) Chloracetanilide, z.B. N-Methoxymethyl-2,6-diethyl-chloracetanilid (Alachlor), N-(3-Methoxyprop-2-yl)-2-methyl-6-ethyl-chloracetanilid (Metolachlor), N-(3-Methyl-1,2,4-oxadiazol-5-yl-methyl)-chloressigsäure-2,6-dimethylanilid, N-(2,6-Dimethylphenyl)-N-(1-pyrazolylmethyl)-chloressigsäureamid (Metazachlor);
C) Thiocarbamate, z.B. S-Ethyl-N,N-dipropylthiocarbamat (EPTC), S-Ethyl-N,N-düsobutylthiocarbamat (Butylate);
D) Cyclohexandionoxime, z.B. 3-(1-Allyloxyiminobutyl)-4-hydroxy-6,6-dimethyl-2-oxocyclohex-3-encarbon-säuremethylester, (Alloxydim), 2-(1-Ethoxyiminobutyl)-5-(2-ethylthiopropyl)-3-hydroxy-cyclohex-2-en-1-on (Sethoxydim), 2-(1-Ethoxyiminobutyl)-5-(2-phenylthiopropyl)-3-hydroxy-cyclohex-2-en-1-on (Cloproxydim), 2-(1-(3-Chlorallyloxy)iminobutyl)-5-(2-ethylthiopropyl)-3-hydroxy-cyclohex-2-en-1-on, 2-(1-(3-Chlorallyloxy)iminopropyl)-5-(2-ethylthiopropyl)-3-hydroxy-cyclohex-2-en-1-on (Clethodim), 2-(1-Ethoxyiminobutyl)-3-hydroxy-5-(thian-3-yl)-cyclohex-2-enon (Cycloxydim), 2-(1-Ethoxyiminopropyl)-5-(2,4,6-trimethylphenyl)-3-hydroxy-cyclohex-2-en-1-on (Tralkoxydim);
E) Benzoylcyclohexandione, z.B. 2-(2-Chlor-4-methylsulfonylbenzoyl)-cyclohexan-1,3-dion (SC-0051, EP-A-0137963), 2-(2-Nitrobenzoyl)-4,4-dimethylcyclohexan-1,3-dion (EP-A-0274634), 2-(2-Nitro-4-methylsulfonylbenzoyl)-4,4-dimethylcyclohexan-1,3-dion (WO-A-91/13548, Mesotrione);
F) S-(N-Aryl-N-alkyl-carbamoylmethyl)-dithiophosphonsäureester, wie S-[N-(4-Chlorphenyl)-N-isopropyl-carbamoylmethyl]-O,O-dimethyl-dithiophosphat (Anilophos).
G) Alkylazine, z.B. wie beschrieben in WO-A-97/08156, WO-A-97/31904, DE-A-19826670, WO-A-98/15536, WO-A-98/15537, WO-A-98/15538, WO-A-98/15539 sowie auch DE-A-19828519, WO-A-98/34925, WO-A-98/42684, WO-A-99/18100, WO-A-99/19309, WO-A-99/37627 und WO-A-99/65882, vorzugsweise solche der Formel (G) 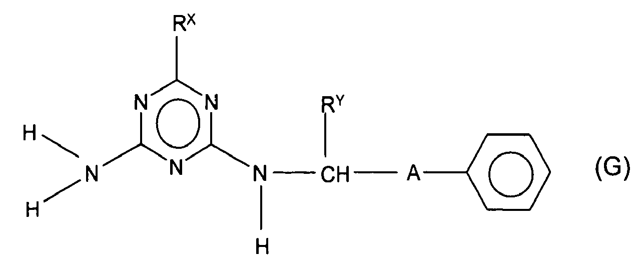 worin
   - R^{X}: (C₁-C₄)-Alkyl oder (C₁-C₄)-Haloalkyl;
   - R^{Y}: (C₁-C₄)-Alkyl, (C₃-C₆)-Cycloalkyl oder (C₃-C₆)-Cycloalkyl-(C₁-C₄)-Alkyl und
   - A: -CH₂-, -CH₂-CH₂-, -CH₂-CH₂-CH₂-, -O-, -CH₂-CH₂-O-, -CH₂-CH₂-CH₂-O-
   bedeuten, besonders bevorzugt solche der Formel G1-G7 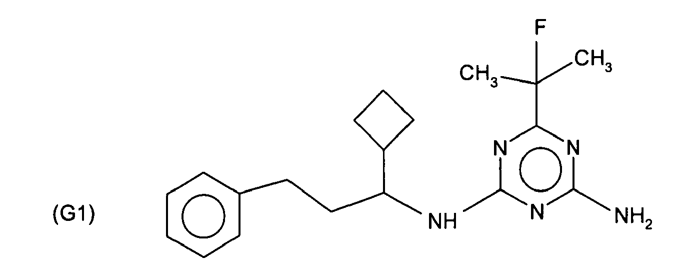 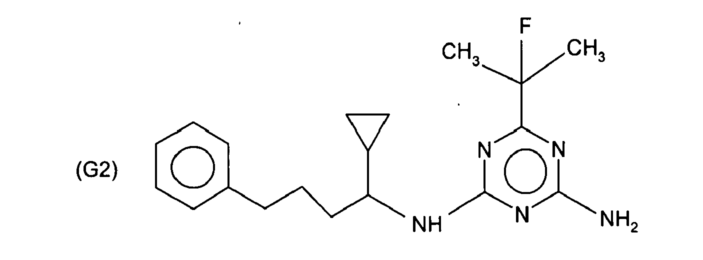 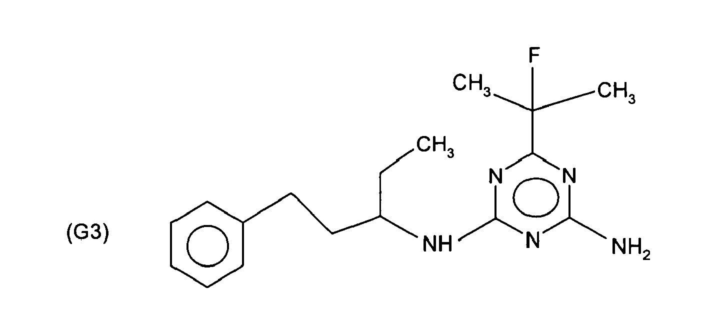 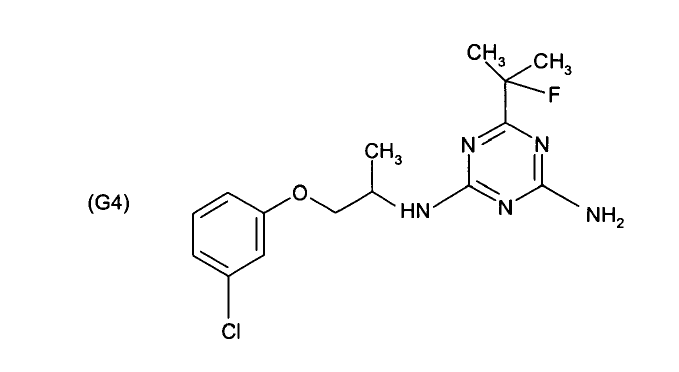 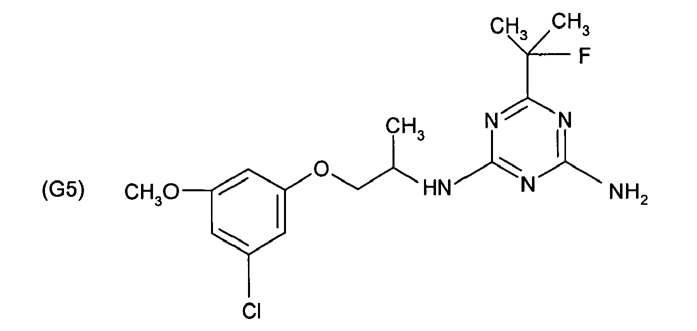 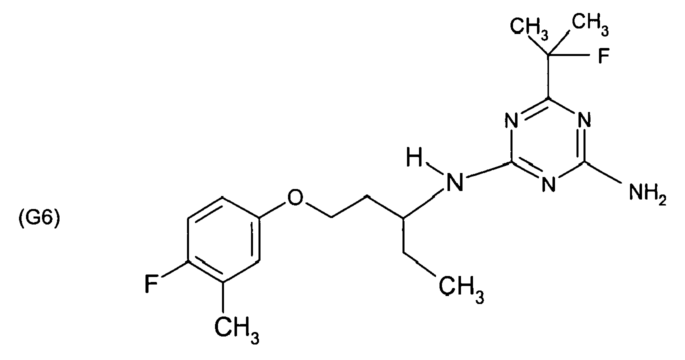 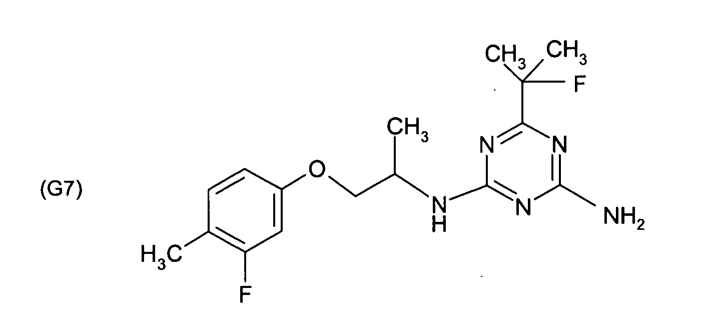
H) Phosphor-haltige Herbizide, z.B. vom Glufosinate-Typ wie Glufosinate im engeren Sinne, d. h. D,L-2-Amino-4-[hydroxy(methyl)phosphinyl]-butansäure, Glufosinate-monoammoniumsalz, L-Glufosinate, L- oder (2S)-2-Amino-4-[hydroxy(methyl)phosphinyl]-butansäure, L-Glufosinate-monoammoniumsalz oder Bialaphos (oder Bilanafos), d.h. L-2-Amino-4-[hydroxy(methyl)phosphinyl]-butanoyl-L-alanyl-L-alanin, insbesondere dessen Natriumsalz, oder vom Glyphosate-Typ wie Glyphosate, d.h. N-(Phosphonomethyl)-glycin, Glyphosate-monoisopropylammoniumsalz, Glyphosate-natriumsalz, oder Sulfosate, d. h. N-(Phosphonomethyl)-glycin-trimesiumsalz = N-(Phosphonomethyl)-glycintrimethylsulfoxoniumsalz.
   Weiter zu nennen wären hier auch Imidazolinone, Pyrimidinyloxy-pyridincarbonsäure-Derivate, Pyrimidyloxy-benzoesäure-Derivate, Triazolopyrimidin-sulfonamid-Derivate mit typischen Vertretern wie z.B. Diflufenican, Bromoxynilhaltige oder loxynilhaltige Produkte, Herbizide aus der Klasse der Oxyacetamide wie Flufenacet, Herbizide aus der Klasse der Aryloxy-Phenoxypropionate wie Fenoxaprop-p-ethyl, Rübenherbizide wie Desmedipham, Phenmedipham, Ethofumesate oder Metamitron, oder auch Wirkstoffe aus der Klasse der HPPD-Inhibitoren (z.B. Isoxaflutole, Sulcotrione, Mesotrione). Speziell beispielsweise:
I) Imidazolinone, z.B. 2-(4-Isopropyl-4-methyl-5-oxo-2-imidazolin-2-yl)-5-methylbenzoesäure-methylester und 2-(4-Isopropyl-4-methyl-5-oxo-2-imidazolin-2-yl)-4-methylbenzoesäure (Imazamethabenz), 5-Ethyl-2-(4-isopropyl-4-methyl-5-oxo-2-imidazolin-2-yl)-pyridin-3-carbonsäure (Imazethapyr), 2-(4-Isopropyl-4-methyl-5-oxo-2-imidazolin-2-yl)-chinolin-3-carbonsäure (Imazaquin), 2-(4-Isopropyl-4-methyl-5-oxo-2-imidazolin-2-yl)-pyridin-3-carbonsäure (Imazapyr), 5-Methyl-2-(4-isopropyl-4-methyl-5-oxo-2-imidazolin-2-yl)-pyridin-3-carbonsäure (Imazethamethapyr);
J) Triazolopyrimidinsulfonamid-Derivate, z.B. N-(2,6-Difluorphenyl)-7-methyl-1,2,4-triazolo[1,5-c]pyrimidin-2-sulfonamid (Flumetsulam), N-(2,6-Dichlor-3-methylphenyl)-5,7-dimethoxy-1,2,4-triazolo[1,5-c]pyrimidin-2-sulfonamid, N-(2,6-Difluorphenyl)-7-fluor-5-methoxy-1,2,4-triazolo[1,5-c]pyrimidin-2-sulfonamid, N-(2,6-Dichlor-3-methylphenyl)-7-chlor-5-methoxy-1,2,4-triazolo[1,5-c]pyrimidin-2-sulfonamid, N-(2-Chlor-6-methoxycarbonyl)-5,7-dimethyl-1,2,4-triazolo[1,5-c]pyrimidin-2-sulfonamid (EP-A-0343752, US 4,988,812);
K) Pyrimidinyloxy-pyridincarbonsäure- bzw. Pyrimidinyloxybenzoesäure-Derivate, z.B. 3-(4,6-Dimethoxypyrimidin-2-yl)-oxy-pyridin-2-carbonsäurebenzyl-ester (EP-A-0249707), 3-(4,6-Dimethoxypyrimidin-2-yl)-oxy-pyridin-2-carbonsäuremethylester (EP-A-0249707), 2,6-Bis[(4,6-dimethoxypyrimidin-2-yl)-oxy]-benzoesäure (EP-A-0321846), 2,6-Bis[(4,6-dimethoxypyrimidin-2-yl)-oxy]-benzoesäure-1-(ethoxycarbonyl-oxyethyl)-ester (EP-A-0472113).
L) Sulfonamide, sowie deren Salze, die nicht unter den Umfang der allgemeinen Formel (I) (Komponente a) fallen. Zu nennen wären Vertreter aus der Gruppe der Phenylsulfonylharnstoffe, wie lodosulfuron-methyl und dessen Natriumsalz (lodosulfuron-methyl-natrium) und Mesosulfuron-methyl und dessen Natriumsalz, sowie Vertreter aus der Gruppe der sonstigen Sulfonamide, wie Amidosulfuron und dessen Natriumsalz (Amidosulfuron-methyl-natrium).

Die Herbizide der Gruppen A bis L sind beispielsweise aus den oben jeweils genannten Schriften und aus "The Pesticide Manual", 12. Auflage (2000) und 13. Auflage (2003), The British Crop Protection Council, "Agricultural Chemicals Book II - Herbicides -", by W.T. Thompson, Thompson Publications, Fresno CA, USA 1990 und "Farm Chemicals Handbook '90", Meister Publishing Company, Willoughby OH, USA 1990, bekannt.

Als optional enthaltene von den Komponenten (a) und (c) verschiedene agrochemische Wirkstoffe (Komponente f) kommen für die erfindungsgemäßen Formulierungen beispielsweise die nachfolgend genannten bekannten Wirkstoffe in Frage, wie sie in z.B. Weed Research 26, 441-445 (1986), oder "The Pesticide Manual", 12. Auflage (2000) und 13. Auflage (2003), The British Crop Protection Council, und dort zitierter Literatur beschrieben sind, z.B. in Mischungsformulierungen oder als Tank-Mischpartner. Die Verbindungen sind entweder mit dem "common name" nach der International Organization for Standardization (ISO) oder mit dem chemischen Namen, gegebenenfalls zusammen mit einer üblichen Codenummer bezeichnet und umfassen stets sämtliche Anwendungsformen wie Säuren, Salze, Ester und Isomere wie Stereoisomere und optische Isomere: acetochlor; acifluorfen; aclonifen; AKH 7088, d.h. [[[1-[5-[2-Chloro-4-(trifluoromethyl)-phenoxy]-2-nitrophenyl]-2-methoxyethylidene]-amino]-oxy]-essigsäure und -essigsäuremethylester; alachlor; alloxydim; ametryn; amitrol; AMS, d.h. Ammoniumsulfamat; anilofos; asulam; atrazin; azafenidine (DPX-R6447), aziprotryn; barban; BAS 516 H, d.h. 5-Fluor-2-phenyl-4H-3,1-benzoxazin-4-on; benazolin; benfluralin; benfuresate; bensulide; bentazone; benzofluor; benzoylpropethyl; benzthiazuron; bialaphos; bifenox; bispyribac-natrium (KIH-2023), bromacil; bromobutide; bromofenoxim; bromoxynil, insbesondere bromoxynil-octanoat und bromoxynil-heptanoat; butachlor; butamifos; butenachlor; buthidazole; butralin; butroxydim (ICI-0500), butylate; cafenstrole (CH-900); carbetamide; cafentrazone; CDAA, d.h. 2-Chlor-N,N-di-2-propenylacetamid; CDEC, d.h. Diethyldithiocarbaminsäure-2-chlorallylester; chlomethoxyfen; chloramben; cloransulam-methyl (XDE-565), chlorazifop-butyl, chlorbromuron; chlorbufam; chlorfenac; chlorflurenol-methyl; chloridazon; chlornitrofen; chlorotoluron; chloroxuron; chlorpropham; chlorthal-dimethyl; chlorthiamid; cinidon-ethyl, cinmethylin; clethodim; clodinafop und dessen Esterderivate (z.B. clodinafoppropargyl); clomazone; clomeprop; cloproxydim; clopyralid; cumyluron (JC 940); cyanazine; cycloate; cycloxydim; cycluron; cyhalofop und dessen Esterderivate (z.B. Butylester, DEH-112); cyperquat; cyprazine; cyprazole; 2,4-D; 2,4-DB; dalapon; desmedipham; desmetryn; di-allate; dicamba; dichlobenil; dichlorprop; diclofop und dessen Ester wie diclofop-methyl; diclosulam (XDE-564), diethatyl; difenoxuron; difenzoquat; diflufenican; diflufenzopyr-natrium (SAN-835H), dimefuron; dimethachlor; dimethametryn; dimethenamid (SAN-582H); dimidazone, 5-(4,6-Dimethylpyrimidin-2-yl-carbamoylsulfamoyl)-1-(2-pyridyl)-pyrazol-4-carbonsäuremethylester (NC-330); triaziflam (IDH-1105), cinosulfon; dimethipin, dinitramine; dinoseb; dinoterb; diphenamid; dipropetryn; diquat; dithiopyr; diuron; DNOC; eglinazine-ethyl; EL 177, d.h. 5-Cyano-1-(1,1-dimethylethyl)-N-methyl-1H-pyrazole-4-carboxamid; endothal; indanofan (MK-243), EPTC; esprocarb; ethalfluralin; ethidimuron; ethiozin; ethofumesate; F5231, d.h. N-[2-Chlor-4-fluor-5-[4-(3-fluorpropyl)-4,5-dihydro-5-oxo-1 H-tetrazol-1-yl]-phenyl]-ethansulfonamid; ethoxyfen und dessen Ester (z.B. Ethylester, HN-252); etobenzanid (HW 52); 3-(4-Ethoxy-6-ethyl-1,3,5-triazin-2-yl)-1-(2,3-dihydro-1,1-dioxo-2-methylbenzo[b]thiophen-7-sulfonyl)harnstoff (EP-A-079683); 3-(4-Ethyl-6-methoxy-1,3,5-triazin-2-yl)-1-(2,3-dihydro-1,1-dioxo-2-methylbenzo[b]thiophen-7-sulfonyl)hamstoff (EP-A-079683); fenoprop; clomazone, fenoxaprop und fenoxaprop-P sowie deren Ester, z.B. fenoxaprop-P-ethyl und fenoxaprop-ethyl; butroxydimfenuron; flamprop-methyl; flufenacet (BAY-FOE-5043), fluazifop und fluazifop-P und deren Ester, z.B. fluazifop-butyl und fluazifop-P-butyl, florasulam (DE-570); fluchloralin; flumetsulam; fluometuron; flumiclorac und dessen Ester (z.B. Pentylester, S-23031); flumioxazin (S-482); flumipropyn; flupoxam (KNW-739); fluorodifen; fluoroglycofen-ethyl; flupropacil (UBIC-4243); fluridone; flurochloridone; fluroxypyr; flurtamone; fluthiacetmethyl (KIH-9201), fomesafen; fosamine; furyloxyfen; glufosinate; glyphosate; halosafen; haloxyfop und dessen Ester; haloxyfop-P (= R-haloxyfop) und dessen Ester; hexazinone; imazamethabenz-methyl; imazamox (AC-299263), imazapyr; imazaquin und Salze wie das Ammoniumsalz; imazapic; imazethapyr; ioxynil; isocarbamid; isopropalin; isoproturon; isouron; isoxaben; isoxapyrifop; karbutilate; lactofen; lenacil; linuron; MCPA; MCPB; mecoprop; mefenacet; mefluidid; metamitron; metazachlor; methabenzthiazuron; metam; methazole; methoxyphenone; methyldymron; metobenzuron, metobromuron; metolachlor; S-metolachlor, metosulam (XRD 511); metoxuron; metribuzin; maleic hydrazide; molinate; monalide; monocarbamide dihydrogensulfate; monolinuron; monuron; MT 128, d.h. 6-Chlor-N-(3-chlor-2-propenyl)-5-methyl-N-phenyl-3-pyridazinamin; MT 5950, d.h. N-[3-Chlor-4-(1-methylethyl)-phenyl]-2-methylpentanamid; naproanilide; napropamide; naptalam; NC 310, d.h. 4-(2,4-dichlorbenzoyl)-1-methyl-5-benzyloxypyrazol; neburon; nipyraclophen; nitralin; nitrofen; nitrofluorfen; norflurazon; orbencarb; oryzalin; oxadiargyl (RP-020630); oxadiazon; oxaziclomefone (MY-100), oxyfluorfen; paraquat; pebulate; pendimethalin; pentoxazone (KPP-314), perfluidone; phenisopham; phenmedipham; picloram; piperophos; pyributicarb; pirifenop-butyl; pretilachlor; procyazine; prodiamine; profluralin; proglinazine-ethyl; prometon; prometryn; propachlor; propanil; propaquizafop und dessen Ester; propazine; propham; propisochlor; propyzamide; prosulfalin; prosulfocarb; prynachlor; pyraflufen-ethyl (ET-751), chloridazon; pyrazoxyfen; pyribenzoxim, pyridate; pyriminobac-methyl (KIH-6127), pyrithiobac (KIH-2031); pyroxofop und dessen Ester (z.B. Propargylester); quinclorac; quinmerac; quizalofop, quizalofop und quizalofop-P und deren Esterderivate z.B. quizalofop-ethyl; quizalofop-P-tefuryl und -ethyl; S 275, d.h. 2-[4-Chlor-2-fluor-5-(2-propynyloxy)-phenyl]-4,5,6,7-tetrahydro-2H-indazol; secbumeton; sethoxydim; siduron; simazine; simetryn; SN 106279, d.h. 2-[[7-[2-Chlor-4-(trifluor-methyl)-phenoxy]-2-naphthalenyl]-oxy]-propansäure und -methylester; sulfazuron; glyphosate-trimesium (ICI-A0224); TCA; tebutam (GCP-5544); tebuthiuron; tepraloxydim (BAS-620H), terbacil; terbucarb; terbuchlor; terbumeton; terbuthylazine; terbutryn; TFH 450, d.h. N,N-Diethyl-3-[(2-ethyl-6-methylphenyl)-sulfonyl]-1 H-1,2,4-triazol-1-carboxamid; thenylchlor (NSK-850); thiazafluron; thiazopyr (Mon-13200); thidiazimin (SN-124085); thiobencarb; tiocarbazil; tralkoxydim; tri-allate; triazofenamide; triclopyr; tridiphane; trietazine; trifluralin; trimeturon; tsitodef; vernolate; WL 110547, d.h. 5-Phenoxy-1-[3-(trifluormethyl)-phenyl]-1 H-tetrazol; UBH-509; D-489; LS 82-556; KPP-300; KPP-421, MT-146, NC-324; butenachlor (KH-218); DPX-N8189; haloxyfop-etotyl (DOWCO-535); DK-8910; flumioxazin (V-53482); PP-600; MBH-001, amicarbazone, aminopyralid, beflubutamid, benzobicyclon, benzofenap, benzfendizone, butafenacil, chlorfenprop, cloprop, daimuron, dichlorprop-P, dimepipeate, dimethenamid-P, fentrazamide, flamprop-M, fluazolate, indanofan, isoxachlortole, isoxaflutole, MCPA-thioethyl, mecoprop-P, mesotrione, metamifop, penoxsulam, pethoxamid, picolinafen, profluazol, profoxydim, pyraclonil, pyrazolynate, pyridafol, pyriftalid, sulcotrione, thidiazuron, iodosulfuron-methyl, iodosulfuron-methyl-sodium, mesosulfuron-methyl, mesosulfuron-methyl-sodium, amidosulfuron, amidosulfuron-sodium.

Der Anteil der agrochemische Wirkstoffe (Komponente f), die von den Komponenten (a) und (b) verschiedenen sind und die gegebenenfalls in den erfindungsgemäßen Formulierungen enthalten sein können, kann 0,05 - 70 Gew.-%, bevorzugt 0,1 - 20 Gew.-%, besonders bevorzugt 0,3 - 10 Gew.-%, ganz besonders bevorzugt 0,5 - 5 Gew.-% betragen.

Als optionale weitere übliche Hilfs- und Zusatzstoffe (Komponente g) können beispielsweise von der Komponente (e) verschiedene Hilfs- und Zusatzstoffe, ausgewählt aus den Gruppen Desintegrationsmittel, Bindemittel (Haftvermittler), Mittel zum Einstellen des pH-Werts und dergleichen enthalten sein.

Geeignete Desintegrationsmittel können ausgewählt werden aus der Gruppe der modifizierten Kohlenhydrate, wie mikrokristalline Cellulose, und quervernetzten Polyvinylpyrrolidone.
Typische Vertreter geeigneter Desintegrationsmittel sind unter anderem ®Avicel PH 101 (mikrokristalline Cellulose), ®Agrimer XLF (quervernetztes Polyvinylpyrrolidon), ®Disintex 200 (quervernetztes Polyvinylpyrrolidon).
Bevorzugt sind quervernetzte Polyvinylpyrrolidone, wie ®Agrimer XLF.
Der Anteil an Desintegrationsmitteln, die gegebenenfalls in den erfindungsgemäßen Formulierungen enthalten sein können, kann 0,1 - 50 Gew.-%, bevorzugt 0,5 - 25 Gew.-%, besonders bevorzugt 1-10 Gew.-% betragen.

Geeignete Bindemittel (Haftvermittler) können ausgewählt werden aus der Gruppe Polyvinylpyrrolidon (PVP), Polyvinylalkohol, Co-Polymer aus PVP und Dimethylaminoethylmethacrylat, butyliertes PVP, Co-Polymer aus Vinylchlorid und Vinylacetat, Na-Salz des Co-Polymers aus Propensulfonsäure und partiell hydrolysiertem Vinylacetat, Natriumcaseinat, Phenolharze, modifizierte Cellulose-Typen.
Typische Vertreter geeigneter Bindemittel sind unter anderem ®Luviskol (Polyvinylpyrrolidon), ®Mowiol (Polyvinylalkohol), ®Tylose (modifizierte Cellulose). Bevorzugt sind Polyvinylpyrrolidon-Typen, besonders bevorzugt sind Typen von niedrigem Molekulargewicht wie ®Luviskol K30.
Der Anteil an Bindemitteln, die gegebenenfalls in den erfindungsgemäßen Formulierungen enthalten sein können, kann 0,5 - 20 Gew.-%, bevorzugt 1-10 Gew.-%, besonders bevorzugt 3 - 8 Gew.-% betragen.

Geeignete Mittel zur Einstellung des pH-Wertes können ausgewählt werden aus der Gruppe der Hydroxide und Carbonate von Alkali- und Erdalkalimetallen.
Typische Vertreter geeigneter Mittel zur Einstellung des pH-Wertes sind unter anderem NaOH, KOH, Na₂CO₃ und K₂CO₃.
Bevorzugt sind NaOH und Na₂CO.

Der Anteil an Mitteln zur Einstellung des pH-Wertes, die gegebenenfalls in den erfindungsgemäßen Formulierungen enthalten sein können, kann 0,01 - 5 Gew.-%, bevorzugt 0,05 - 3 Gew.-%, besonders bevorzugt 0,1 - 2 Gew.-% betragen.

Eine besonders bevorzugte Ausführungsform der Erfindung enthält (mit beispielhafter Nennung von Handelsprodukten und deren Anteilen)
(a) Phenylsulfonylharnstoff, wie beispielsweise Metsulfuron-methyl mit 6,75 Gew.-%, und
(b) einen Safener, wie beispielsweise Mefenpyr-diethyl mit 9 Gew.-%;
(c) ein Lösungsmittel, wie beispielsweise ®Solvesso 200ND mit 15,25 Gew.-%;
(d) mehrere Trägermaterialien, ausgewählt aus den Gruppen:
   (d-1) Trägerstoffe mit niedriger Saugfähigkeit, wie beispielsweise ®Harborlite 300 mit 5 Gew.-% und ®Kaolin 1777 mit 18,99 Gew.-%, und
   (d-2) Trägerstoffe mit hoher Saugfähigkeit, wie beispielsweise ®Sipernat 50S mit 12 Gew.-%;
(e) mehrere übliche Hilfs- und Zusatzstoffe, ausgewählt aus den Gruppen:
   (e-1) Emulgatoren, wie beispielsweise ®Calsogen AR100 ND (anionisch) mit 2,63 Gew.-% und ®Emulsogen 3510 (nichtionisch) mit 1,5 Gew.-%,
   (e-2) Antischaummittel, wie beispielsweise ®Antischaum-Mittel SE 2 mit 1 Gew.-%,
   (e-3) Netzmittel, wie beispielsweise ®Synperonic T/905 mit 6 Gew.-%,
   (e-4) Dispergatoren, wie beispielsweise ®Morwet D425 mit 10 Gew.-%;
(f) einen weiteren Wirkstoff aus der Gruppe der Sulfonamide sowie deren Salze die nicht unter den Umfang der allgemeinen Formel (I) (Komponente a) fallen, wie beispielsweise Mesosulfuron-methyl mit 4,5 Gew.-%;
(g) mehrere, weitere von der Komponente (e) verschiedene Hilfs- und Zusatzstoffe, ausgewählt aus den Gruppen:
   Bindemittel, wie beispielsweise ®Luviskol K30 mit 5 Gew.-%, und
   Mittel zur Einstellung des pH-Wertes, wie beispielsweise Na-Hydoxid (NaOH, 100%ig) mit 0,38 Gew.-%,
   sowie eine verbleibende Restfeuchte mit beispielsweise 2 Gew.-%, wobei
   die Komponente (b) zur Komponente (c) im Verhältnis 0,6 (b) : 1 (c) steht und gleichzeitig die Summe der Komponenten (b) und (c) zur Komponente (d-2) im Verhältnis: 2 [(b) + (c)] : 1 (d-2) steht.

Eine weitere besonders bevorzugte Ausführungsform der Erfindung enthält (mit beispielhafter Nennung von Handelsprodukten und deren Anteilen)
(a) Phenylsulfonylharnstoff, wie beispielsweise Metsulfuron-methyl mit 11,25 Gew.-%, und
(b) einen Safener, wie beispielsweise Mefenpyr-diethyl mit 9 Gew.-%;
(c) ein Lösungsmittel, wie beispielsweise ®Solvesso 200ND mit 15,25 Gew.-%;
(d) mehrere Trägermaterialien, ausgewählt aus den Gruppen:
   (d-1) Trägerstoffe mit niedriger Saugfähigkeit, wie beispielsweise ®Harborlite 300 mit 5 Gew.-% und ®Kaolin 1777 mit 18,99 Gew.-%, und
   (d-2) Trägerstoffe mit hoher Saugfähigkeit, wie beispielsweise ®Sipernat 50S mit 12 Gew.-%;
(e) mehrere übliche Hilfs- und Zusatzstoffe, ausgewählt aus den Gruppen:
   (e-1) Emulgatoren, wie beispielsweise ®Calsogen AR100 ND (anionisch) mit 2,63 Gew.-% und ®Emulsogen 3510 (nichtionisch) mit 1,5 Gew.-%,
   (e-2) Antischaummittel, wie beispielsweise ®Antischaum-Mittel SE 2 mit 1 Gew.-%
   (e-3) Netzmittel, wie beispielsweise ®Synperonic T/905 mit 6 Gew.-%,
   (e-4) Dispergatoren, wie beispielsweise ®Morwet D425 mit 10 Gew.-%;
(g) mehrere, weitere von der Komponente (e) verschiedene Hilfs- und Zusatzstoffe, ausgewählt aus den Gruppen:
   Bindemittel, wie beispielsweise ®Luviskol K30 mit 5 Gew.-%, und
   Mittel zur Einstellung des pH-Wertes, wie beispielsweise Na-Hydoxid (NaOH, 100%ig) mit 0,38 Gew.-%, sowie eine verbleibende Restfeuchte mit beispielsweise 2 Gew.-%,
wobei
die Komponente (b) zur Komponente (c) im Verhältnis 0,6 (b) : 1 (c) steht und gleichzeitig die Summe der Komponenten (b) und (c) zur Komponente (d-2) im Verhältnis: 2 [(b) + (c)] : 1 (d-2) steht.

Die Erfindung betrifft weiterhin ein herbizides Mittel, welches aus den erfindungsgemäßen Formulierungen durch Verdünnen mit Flüssigkeiten, bevorzugt Wasser, hergestellt werden kann.

Zur Anwendung können die erfindungsgemäßen Formulierungen gegebenenfalls in üblicher Weise, z.B. zu Suspensionen, Emulsionen, Suspoemulsionen oder Lösungen verdünnt werden, z.B. mittels Wasser. Es kann vorteilhaft sein, den so erhaltenen herbiziden Mitteln (Spritzbrühen) weitere Wirkstoffe, bevorzugt agrochemische Wirkstoffe (z.B. als Tankmischpartner in Form entsprechender Formulierungen) und/oder zur Anwendung übliche Hilfs- und Zusatzstoffe, z.B. Adjuvantien wie z.B. selbstemulgierende Öle wie Pflanzenöle oder Paraffinöle und/oder Düngemittel zuzugeben. Gegenstand der vorliegenden Erfindung sind daher auch die auf solche Weise hergestellten herbiziden Mittel.

Das herbizide Mittel (Spritzbrühe) pro ha beträgt üblicherweise 50 bis 1500 Liter, vorzugsweise 50 bis 500 Liter, besonders bevorzugt 75 bis 350 Liter Wasser. In einigen Fällen können die hier angegebenen Grenzwerte auch unter- bzw. überschritten werden.

Die Formulierungen sind auch für eine Flugzeugapplikation geeignet. Hierzu werden erfindungsgemäße Formulierungen entweder unverdünnt, verdünnt mit Wasser oder mit organischen Lösungsmitteln ausgebracht. Das Volumen an zusätzlicher Trägerflüssigkeit schwankt dabei in der Regel von 0,5 bis 50 Liter pro Hektar.

Die Aufwandmenge der erfindungsgemäßen Formulierungen pro Hektar schwankt im allgemeinen und ist abhängig von jedem einzelnen Wirkstoff aus der Gruppe der Sulfonamide der allgemeinen Formel (I) und deren Salzen Komponente (a) in den jeweiligen Kombinationen. Sie beträgt im Hinblick auf die gesamte erfindungsgemäße Formulierung im allgemeinen 5 g bis 5 kg feste, wasserdispergierbare Formulierung pro Hektar, bevorzugt 25 g bis 2,5 kg, besonders bevorzugt 25 g bis 1,5 kg, ganz besonders bevorzugt 50 g bis 1,5 kg und insbesondere besonders bevorzugt 50 g bis 500 g; und im Hinblick auf Komponente (a) im allgemeinen 0,5 g bis 200 g Wirkstoff pro Hektar, bevorzugt 1,0 g bis 100 g, besonders bevorzugt 1,0 g bis 75 g, wobei in einzelnen Fällen die hier angegebenen Grenzwerte auch unter- bzw. überschritten werden können.

Eine besondere Ausführungsform der Erfindung betrifft die Verwendung der aus den erfindungsgemäßen Formulierungen erhältlichen herbiziden Mittel zur Bekämpfung von unerwünschtem Pflanzenwuchs (Schadpflanzen), im Folgenden als "herbizides Mittel bezeichnet, bei gleichzeitiger exzellenter Kulturpflanzenverträglichkeit, d.h. hoher Selektivität.

Die herbiziden Mittel weisen eine ausgezeichnete herbizide Wirksamkeit gegen ein breites Spektrum wirtschaftlich wichtiger mono- und dikotyler Schadpflanzen auf. Auch schwer bekämpfbare perennierende Unkräuter, die aus Rhizomen, Wurzelstöcken oder anderen Dauerorganen austreiben, werden gut erfasst. Dabei können die herbiziden Mittel z.B. im Vorsaat-, Vorauflauf- oder Nachauflaufverfahren ausgebracht werden. Im einzelnen seien beispielhaft einige Vertreter der mono- und dikotylen Unkrautflora genannt, die durch die herbiziden Mittel kontrolliert werden können, ohne dass durch die Nennung eine Beschränkung auf bestimmte Arten erfolgen soll.

Auf der Seite der monokotylen Unkrautarten werden z.B. Apera spica venti, Avena spp., Alopecurus spp., Brachiaria spp., Digitaria spp., Lolium spp., Echinochloa spp., Panicum spp., Phalaris spp., Poa spp., Setaria spp. sowie Bromus spp. wie Bromus catharticus, Bromus secalinus, Bromus erectus, Bromus tectorum und Bromus japonicus und Cyperusarten aus der annuellen Gruppe und auf seiten der perennierenden Spezies Agropyron, Cynodon, Imperata sowie Sorghum und auch ausdauernde Cyperusarten gut erfaßt. Bei dikotylen Unkrautarten erstreckt sich das Wirkungsspektrum auf Arten wie z.B. Abutilon spp., Amaranthus spp., Chenopodium spp., Chrysanthemum spp., Galium spp. wie Galium aparine, Ipomoea spp., Kochia spp., Lamium spp., Matricaria spp., Pharbitis spp., Polygonum spp., Sida spp., Sinapis spp., Solanum spp., Stellaria spp., Veronica spp. und Viola spp., Xanthium spp., auf der annuellen Seite sowie Convolvulus, Cirsium, Rumex und Artemisia bei den perennierenden Unkräutern.

Unter den spezifischen Kulturbedingungen im Reis vorkommende Schadpflanzen wie z.B. Echinochloa, Sagittaria, Alisma, Eleocharis, Scirpus und Cyperus werden von den herbiziden Mitteln ebenfalls hervorragend bekämpft.

Werden die herbiziden Mittel vor dem Keimen auf die Erdoberfläche appliziert, so wird entweder das Auflaufen der Unkrautkeimlinge vollständig verhindert oder die Unkräuter wachsen bis zum Keimblattstadium heran, stellen jedoch dann ihr Wachstum ein und sterben schließlich nach Ablauf von drei bis vier Wochen vollkommen ab.

Bei Applikation der herbiziden Mittel auf die grünen Pflanzenteile im Nachauflaufverfahren tritt ebenfalls sehr rasch nach der Behandlung ein drastischer Wachstumsstop ein und die Unkrautpflanzen bleiben in dem zum Applikationszeitpunkt vorhandenen Wachstumsstadium stehen oder sterben nach einer gewissen Zeit ganz ab, so dass auf diese Weise eine für die Kulturpflanzen schädliche Unkrautkonkurrenz sehr früh und nachhaltig beseitigt wird.

Die herbiziden Mittel zeichnen sich durch eine schnell einsetzende und lang andauernde herbizide Wirkung aus. Die Regenfestigkeit der Wirkstoffe in den herbiziden Mitteln ist in der Regel günstig. Als besonderer Vorteil fällt ins Gewicht, dass die in den herbiziden Mittel verwendeten und wirksamen Dosierungen von herbiziden Verbindungen so gering eingestellt werden können, dass ihre Bodenwirkung optimal niedrig ist. Somit wird deren Einsatz nicht nur in empfindlichen Kulturen erst möglich, sondern Grundwasser-Kontaminationen werden praktisch vermieden. Durch die erfindungsgemäße Kombination von Wirkstoffen wird eine erhebliche Reduzierung der nötigen Aufwandmenge der Wirkstoffe ermöglicht.

Die genannten Eigenschaften und Vorteile sind in der praktischen Unkrautbekämpfung von Nutzen, um landwirtschaftliche Kulturen von unerwünschten Konkurrenzpflanzen freizuhalten und damit die Erträge qualitativ und quantitativ zu sichern und/oder zu erhöhen. Der technische Standard wird durch diese neuen herbiziden Mittel hinsichtlich der beschriebenen Eigenschaften deutlich übertroffen.

Obgleich die herbiziden Mittel eine ausgezeichnete herbizide Aktivität gegenüber mono- und dikotylen Unkräutern aufweisen, werden Kulturpflanzen wirtschaftlich bedeutender Kulturen z.B. zweikeimblättriger Kulturen wie Soja, Baumwolle, Raps, Zuckerrüben, oder Gramineen-Kulturen wie Weizen, Gerste, Roggen, Hafer, Hirse, Reis oder Mais, nur unwesentlich oder gar nicht geschädigt. Die vorliegenden herbiziden Mittel eignen sich aus diesen Gründen sehr gut zur selektiven Bekämpfung von unerwünschtem Pflanzenwuchs in landwirtschaftlichen Nutzpflanzungen oder in Zierpflanzungen.

Darüber hinaus weisen die entsprechenden herbiziden Mittel hervorragende wachstumsregulatorische Eigenschaften bei Kulturpflanzen auf. Sie greifen regulierend in den pflanzeneigenen Stoffwechsel ein und können damit zur gezielten Beeinflussung von Pflanzeninhaltsstoffen und zur Ernteerleichterung wie z.B. durch Auslösen von Desikkation und Wuchsstauchung eingesetzt werden. Desweiteren eignen sie sich auch zur generellen Steuerung und Hemmung von unerwünschtem vegetativem Wachstum, ohne dabei die Pflanzen abzutöten. Eine Hemmung des vegetativen Wachstums spielt bei vielen mono- und dikotylen Kulturen eine große Rolle, da das Lagern hierdurch verringert oder völlig verhindert werden kann.

Aufgrund ihrer herbiziden und pflanzenwachstumsregulatorischen Eigenschaften können die herbiziden Mittel auch zur Bekämpfung von Schadpflanzen in Kulturen von bekannten oder noch zu entwickelnden gentechnisch veränderten Pflanzen eingesetzt werden. Die transgenen Pflanzen zeichnen sich in der Regel durch besondere vorteilhafte Eigenschaften aus, beispielsweise durch Resistenzen gegenüber bestimmten Pestiziden, vor allem bestimmten Herbiziden, Resistenzen gegenüber Pflanzenkrankheiten oder Erregern von Pflanzenkrankheiten wie bestimmten Insekten oder Mikroorganismen wie Pilzen, Bakterien oder Viren. Andere besondere Eigenschaften betreffen z. B. das Erntegut hinsichtlich Menge, Qualität, Lagerfähigkeit, Zusammensetzung und spezieller Inhaltsstoffe. So sind transgene Pflanzen mit erhöhtem Stärkegehalt oder veränderter Qualität der Stärke oder solche mit anderer Fettsäurezusammensetzung des Ernteguts bekannt.

Bevorzugt ist die Anwendung der herbiziden Mittel in wirtschaftlich bedeutenden transgenen Kulturen von Nutz- und Zierpflanzen, z. B. von Gramineen-Kulturen wie Weizen, Gerste, Roggen, Hafer, Hirse, Reis und Mais oder auch Kulturen von Zuckerrübe, Baumwolle, Soja, Raps, Kartoffel, Tomate, Erbse und anderen Gemüsesorten. Vorzugsweise können die herbiziden Mittel in Nutzpflanzenkulturen eingesetzt werden, welche gegenüber den phytotoxischen Wirkungen der Herbizide resistent sind bzw. gentechnisch resistent gemacht worden sind.

Bei der Anwendung der herbiziden Mittel in transgenen Kulturen treten neben den in anderen Kulturen zu beobachtenden Wirkungen gegenüber Schadpflanzen oftmals Wirkungen auf, die für die Applikation in der jeweiligen transgenen Kultur spezifisch sind, beispielsweise ein verändertes oder speziell erweitertes Unkrautspektrum, das bekämpft werden kann, veränderte Aufwandmengen, die für die Applikation eingesetzt werden können, vorzugsweise gute Kombinierbarkeit mit den weiteren herbiziden Wirkstoffen, gegenüber denen die transgene Kultur resistent ist, sowie Beeinflussung von Wuchs und Ertrag der transgenen Kulturpflanzen.

Gegenstand der vorliegenden Erfindung ist somit auch ein Verfahren zur Bekämpfung von unerwünschtem Pflanzenwuchs (Schadpflanzen), vorzugsweise in Pflanzenkulturen wie Getreide (z.B. Weizen, Gerste, Roggen, Hafer, Reis, Mais, Hirse), Zuckerrübe, Zuckerrohr, Raps, Baumwolle und Soja, besonders bevorzugt in monokotylen Kulturen wie Getreide, z.B. Weizen, Gerste, Roggen, Hafer, Kreuzungen davon wie Triticale, Reis, Mais und Hirse, dass dadurch gekennzeichnet ist, dass man die erfindungsgemäßen herbiziden Mittel auf die Schadpflanzen, Pflanzenteile, Pflanzensamen oder die Fläche auf der die Pflanzen wachsen, z.B. die Anbaufläche appliziert.

Die Pflanzenkulturen können auch gentechnisch verändert oder durch Mutationsselektion erhalten sein und sind bevorzugt tolerant gegenüber Acetolactatsynthase (ALS)-Inhibitoren.

Der Herstellungsprozess der erfindungsgemäßen Formulierungen kann aus einer Reihe von an sich bekannten Verfahren ausgewählt werden, welche die Herstellung von festen Formulierungen, wie wasserdispergierbaren Pulvern (WP), Granulaten (WG), und hieraus herstellbarer Kompaktate, wie Schulpen, Tabletten usw., erlauben. Bevorzugt sind hieraus die Verfahren der Extrusions-, Pfannen- und **Wirbelschicht-Granulierung, besonders bevorzugt die Wirbelschicht-Granulierung.**
Allen Verfahren ist gemeinsam, dass die einzelnen Komponenten in den jeweiligen, herstellungsbedingten Mengenverhältnissen zusammengebracht werden.

Die erfindungsgemäßen Formulierungen zeigen im Vergleich zu handelsüblichen Produkten ein signifikant verbessertes Applikationsverhalten, das sich in deutlich erniedrigten Siebrückständen bzw. Sieb- oder Düsenverstopfungen bemerkbar macht.

Daneben weisen die erfindungsgemäßen Formulierungen eine ausgezeichnete chemische Stabilität während der Herstellung und Lagerung auf und eignen sich insbesondere auch für Kombinationen von Wirkstoffen mit unterschiedlichen physikalisch-chemischen Eigenschaften. Ebenso weisen die erfindungsgemäßen Formulierungen eine ausgezeichnete physikalische Stabilität, eine gute Anwenderfreundlichkeit, sowie eine hohe biologische Effektivität und Selektivität auf.

Bei den erfindungsgemäßen Formulierungen liegt der pH-Wert, beispielsweise in 10%iger wässriger Lösung, in der Regel zwischen 7 und 9.

Insgesamt zeigen die erfindungsgemäßen Formulierungen die angestrebte Langzeit-Lagerstabilität und sind anwendungstechnisch einwandfrei.

### Beispiele

Die Beispiele sollen die Erfindung illustrieren und stellen keine Beschränkung auf die in ihnen beschriebenen Verfahren und Verbindungen dar.

### Herstellungsverfahren:

Die Safener (Komponente b) werden mit den Lösungsmitteln (Komponente c) und gegebenenfalls Emulgatoren (Komponente e-1) auf das Trägermaterial (Komponente d-2) aufgetragen, wodurch ein rieselfähiges Absorbat hergestellt wird. Diesem werden dann die übrigen Formulierungs-Komponenten in den jeweiligen Mengenverhältnissen zugemischt. Das entstandene Gemisch wird anschließend mittels Luftstrahlmühle fein vermahlen, und dann mit ca. 5% Wasser befeuchtet. Dieses angefeuchtete Material wird mittels eines Haubenextruders, beispielsweise Lochhaube mit Bohrungen von 0,5 - 0,8 mm Weite, einer Extrusionsgranulierung unterzogen. Die feuchten Granulate werden anschließend an der Luft getrocknet, bis sie einen vorher festgelegten Rest-Wassergehalt aufweisen. Die in Tabelle 1 und 2 gezeigten Beispiele enthalten einen Rest-Wassergehalt von ca. ≤ 2 Gew.-%.

Beschreibung der im Text und in den Beispielen verwendeten Handelsprodukte:

| Metsulfuron-methyl | Wirkstoff (Phenylsulfonylharnstoff), Du Pont |
|---|---|
| Metsulfuron-methylnatrium | Wirkstoff (Phenylsulfonylharnstoff-Natrium-Salz), Du Pont; Salz nach dem Fachmann bekannten Verfahren aus Metsulfuron-methyl hergestellt. |
| lodosulfuronmethylnatrium 91% | Wirkstoff (Phenylsulfonylharnstoffe), Bayer CropScience |
| Mesosulfuronmethyl 95% | Wirkstoff (Phenylsulfonylharnstoffe), Bayer CropScience |
| ®Kaolin Tec 1 / 1777 | Trägermaterial, gering saugfähig (Kaolin, Aluminiumhydrosilicat), u.a. Ziegler & Co. |
| ®Harborlite 300 | Trägermaterial, gering saugfähig (Perlit), Lehmann & Voss |
| ®Aerosol OTB | Netzmittel, Typ Sulfobernsteinsäure-Derivat (Na-iisooctyl-Sulfosuccinat), Cytec - analog ®Newkalgen EX-70 und ®Geropon SDS aus EP-A-764404 |
| ®Morwet D425 | Dispergator (Kondensationsprodukt aus Naphthalinsulfonsäure und Formaldehyd), Akzo Nobel |
| ®Luviskol K30 | Bindemittel (Polyvinylpyrrolidon), BASF |
| ®Wacker ASP 15 | Antischaummittel Emulgator, anionisch (Polydimethylsiloxan, an festem Träger absorbiert), Wacker |
| Mefenpyr-diethyl 94% | Safener (Dichlorphenylpyrazolin-3-carbonsäure), Bayer CropScience |
| ®Solvesso 200ND | Aromatisches Lösungsmittel (alkyliertes Naphthalin), Exxon |
| ®Calsogen AR100 | Emulgator, anionisch (Ca-Dodecylbenzolsulfonat), Clariant |

Beschreibung der im Text und in den Beispielen verwendeten Handelsprodukte (Fortsetzung):

| | |
|---|---|
| ®Emulsogen 3510 | Emulgator, nichtionisch (alkyliertes EO/PO-Blockcopolymerisat), Clariant |
| ®Sipernat 505 | Trägermaterial, hoch saugfähig (Fällungskieselsäure), Degussa |

Prüfverfahren zur Bestimmung der Dispergierbarkeit von festen, wasserdispergierbaren Formulierungen (WG):
Die Probe (ca. 1,5 g WG) wird in einen Messzylinder mit 100 ml CIPAC Standard-Wasser D (= 342 ppm) von Raumtemperatur gegeben. Der Zylinder wird verschlossen und sofort um 180 Grad und zurück gedreht (innerhalb von ca. 2 Sekunden). Die Vollständigkeit der Dispersion wird visuell geprüft. Die Prozedur wird nach jeweils ca. 4 Sekunden so lange wiederholt, bis kein undispergiertes Material zurückbleibt. Die maximale Anzahl der Zylinder-Umdrehungen in diesem Prüfverfahren beträgt 30. Erfolgt innerhalb dieser Anzahl keine vollständige Dispergierung der Probe wird der Test beendet und die Dispergierbarkeit verneint (Dispergierbarkeit: NEIN).

**Tabelle 1: Beispiele 1 (Stand der Technik) und 2 (Erfindungsgemäß)**

| Komponente | Bezeichnung | Beispiel 1 / Stand der Technik [Gew.-%] | Beispiel 2 / Erfindungsgemäß [Gew.-%] |
|---|---|---|---|
| (a) | Metsulfuron-methyl-natrium | 16,80 | 16,80 |
| (b) | Mefenpyr-diethyl 94% | 8,00 | 8,00 |
| (c) | ®Solvesso 200ND | - | 8,37 |
| (d-1) | ®Kaolin Tec 1 | 42,18 | 32,52 |
| (d-2) | ®Sipernat 50S | 6,02 | 6,02 |
| (e-1) | ®Emulsogen 3510 | - | 0,76 |
| (e-1) | Dodecylphenylsulfonat Ca | - | 0,53 |
| (e-2) | ®Wacker ASP 15 | 1,00 | 1,00 |
| (e-3) | ®Aerosol OTB | 5,00 | 5,00 |
| (e-4) | ®Morwet D425 | 15,00 | 15,00 |
| (f) | lodosulfuron-methyl-natrium 91 % | 1,00 | 1,00 |
| (g) | ®Luviskol K30 (Bindemittel) | 5,00 | 5,00 |
| Dispergierbarkeit (gemäß oben beschriebenem Prüfverfahren) | | NEIN | JA |

Anmerkung: Tabelle 1 zeigt die Zusammensetzung fester, wasserdispergierbarer Formulierungen, wobei Beispiel 1 eine standardgemäße, dem Stand der Technik entsprechende Zusammensetzung aufweißt, während Beispiel 2 die erfindungsgemäße Zusammensetzung zeigt.

Das Ergebnis aus dem Prüfverfahren zur Bestimmung der Dispergierbarkeit zeigt deutlich, dass nur die Zusammensetzung der erfindungsgemäßen Formulierung (Beispiel 2) eine ausreichende Dispergierbarkeit aufweist (Dispergierbarkeit: JA).

**Tabelle 2: Beispiele 3 (Stand der Technik) und 4 (Erfindungsgemäß)**

| Komponente | Bezeichnung | Beispiel 3 / Stand der Technik [Gew.-%] | Beispiel 4 / Erfindungsgemäß [Gew.-%] |
|---|---|---|---|
| (a) | Metsulfuron-methyl-natrium | 17,80 | 17,80 |
| (b) | Mefenpyr-diethyl 94% | 8,00 | 8,00 |
| (c) | ®Solvesso 200ND | - | 8,37 |
| (d-1) | ®Kaolin Tec 1 | 42,18 | 32,52 |
| (d-2) | ®Sipernat 50S | 6,02 | 6,02 |
| (e-1) | ®Emulsogen 3510 | - | 0,76 |
| (e-1) | Dodecylphenylsulfonat Ca | - | 0,53 |
| (e-2) | ®WackerASP 15 | 1,00 | 1,00 |
| (e-3) | ®AerosolOTB | 5,00 | 5,00 |
| (e-4) | ®Morwet D425 | 15,00 | 15,00 |
| (g) | ®Luviskol K30 (Bindemittel) | 5,00 | 5,00 |
| Dispergierbarkeit (gemäß oben beschriebenem Prüfverfahren) | | NEIN | JA |

Anmerkung: Tabelle 2 zeigt die Zusammensetzung fester, wasserdispergierbarer Formulierungen, wobei Beispiel 3 eine standardgemäße, dem Stand der Technik entsprechende Zusammensetzung aufweißt, während Beispiel 4 die erfindungsgemäße Zusammensetzung zeigt.

Das Ergebnis aus dem Prüfverfahren zur Bestimmung der Dispergierbarkeit zeigt deutlich, dass nur die Zusammensetzung der erfindungsgemäßen Formulierung (Beispiel 4) eine ausreichende Dispergierbarkeit aufweist (Dispergierbarkeit: JA).

## Patentansprüche

1. Feste, wasserdispergierbare Formulierung enthaltend:
(a) ein oder mehrere Wirkstoffe aus der Gruppe der Sulfonamide der allgemeinen Formel (I) und deren Salze;
(b) ein oder mehrere Safener;
(c) ein oder mehrere Lösungsmittel,
(d) ein oder mehrere Trägermaterialien, ausgewählt aus einer oder mehreren der Gruppen:
(d-1 ) Trägerstoffe mit niedriger Saugfähigkeit,
(d-2) Trägerstoffe mit hoher Saugfähigkeit;
(e) ein oder mehrere übliche Hilfs- und Zusatzstoffe, ausgewählt aus einer oder mehreren der Gruppen
(e-1) Emulgatoren,
(e-2) Antischaummittel,
(e-3) Netzmittel,
(e-4) Dispergatoren;
wobei
die Komponente (b) zur Komponente (c) in folgendem Verhältnis stehen: (b) : (c) im allgemeinen 0,3 bis 2,0 : 1, bevorzugt 0,4 bis 1,5 : 1, besonders bevorzugt 0,5 bis 1,0 : 1; und gleichzeitig die Summe der Komponenten (b) und (c) zur Komponente (d-2) in folgendem Verhältnis stehen: [(b) + (c)] : (d-2) im allgemeinen 1,7 bis 3,9 : 1, bevorzugt 1,85 bis 3,5 : 1, besonders bevorzugt 2,0 bis 3,0 : 1 .

2. Feste, wasserdispergierbare Formulierung gemäß Anspruch 1, worin als Komponente (a) enthalten sind, herbizide Wirkstoffe aus der Gruppe der Phenylsulfonamide, wie Phenylsulfonylharnstoffe und Heteroarylsulfonylharnstoffe sowie deren Salze.

3. Feste, wasserdispergierbare Formulierung gemäß Anspruch 1 oder 2, worin als Komponente (a) enthalten sind Wirkstoffe aus der Gruppe Azimsulfuron und dessen Salze wie das Natriumsalz, Bensulfuron-methyl, Chlorimuron-ethyl, Chlorsulfuron, Ethametsulfuron-methyl, Flupyrsulfuron-methyl und dessen Salze wie das Natriumsalz, Metsulfuron-methyl, Nicosulfuron und dessen Salze wie das Natriumsalz, Rimsulfuron und dessen Salze wie das Natriumsalz, Sulfometuron-methyl, Thifensulfuron-methyl und dessen Salze wie das Natriumsalz, Tribenuron-methyl, Triflusulfuron-methyl, Methyl-4-[(4,5-dihydro-3-methoxy-4-methyl-5-oxo-1 H-1,2,4-triazol-1-yl)carboxamidosulfonyl]-5-metylthiophen-3-carboxylat und dessen Natriumsalz sowie Foramsulfuron und dessen Natriumsalz.

4. Feste, wasserdispergierbare Formulierung gemäß einem oder mehreren der Ansprüche 1 bis 3, worin als Komponente (b) enthalten sind, Safener aus der Gruppe Mefenpyr-diethyl, Isoxadifen-ethyl, 4-Cyclopropylaminocarbonyl-N-(2-methoxybenzoyl)benzolsulfonamid (Cyprosulfamide), 4-iso-propylaminocarbonyl-N-(2-methoxybenzoyl)benzolsulfonamid.

5. Feste, wasserdispergierbare Formulierung gemäß einem oder mehreren der Ansprüche 1 bis 4, worin als Komponente (c) enthalten sind, Lösungsmittel aus der Gruppe der aromatischen und aliphatischen Kohlenwasserstoffe

6. Feste, wasserdispergierbare Formulierung gemäß einem oder mehreren der Ansprüche 1 bis 5, worin als Komponente (d-1) enthalten sind, Trägerstoffe aus der Gruppe der natürlichen Gerüstsilikate.

7. Feste, wasserdispergierbare Formulierung gemäß einem oder mehreren der Ansprüche 1 bis 6, worin als Komponente (d-2) enthalten sind, Trägerstoffe aus der Gruppe der Calcium-Silikate und Fällungskieselsäuren.

8. Feste, wasserdispergierbare Formulierung gemäß einem oder mehreren der Ansprüche 1 bis 7, worin als Komponente (e-1) enthalten sind, Emulgatoren aus der Gruppe der Kombinationen aus Salzen alkylierter aromatischer Sulfonsäuren mit alkylierten Copolymerisaten aus Ethylen- und Propylenoxid.

9. Feste, wasserdispergierbare Formulierung gemäß einem oder mehreren der Ansprüche 1 bis 8, worin als Komponente (e-2) enthalten sind, Antischaummittel aus der Gruppe der Suspoemulsionen von hydrophobisierten Kieselsäurepartikeln in wässrigen Emulsionskonzentraten auf der Basis flüssiger Silicontenside und feste Antischaummittel.

10. Feste, wasserdispergierbare Formulierung gemäß einem oder mehreren der Ansprüche 1 bis 9, worin als Komponente (e-3) enthalten sind, Netzmittel aus der Gruppe der Blockpolymerisate von Propylenoxid und Ethylenoxid auf Ethylendiamin, die Salze der alkylierten Naphthalinsulfonsäuren und die Salze der **Dioctylsulfobernsteinsäure.**

11. Feste, wasserdispergierbare Formulierung gemäß einem oder mehreren der Ansprüche 1 bis 10, worin als Komponente (e-4) enthalten sind, Dispergatoren aus der Gruppe der Kondensationsprodukte von aromatischen Sulfonsäuren mit Formaldehyd und deren Salze.

12. Feste, wasserdispergierbare Formulierung gemäß einem oder mehreren der Ansprüche 1 bis 11, zusätzlich enthaltend als Komponente (f) ein oder mehrere herbizide Wirkstoffe aus der Gruppe der Carbamate, Thiocarbamate, Halogenacetanilide, substituierte Phenoxy-, Naphthoxy- und Phenoxyphenoxycarbonsäure-Derivate sowie Heteroaryloxyphenoxyalkancarbonsäure-Derivate, wie Chinolyloxy-, Chinoxalyl-oxy-, Pyridyloxy-, Benzoxazolyloxy- und Benzthiazolyloxyphenoxyalkan-carbonsäureester, Cyclohexandionabkömmlinge, Phosphor-haltige Herbizide vom Glufosinate-Typ oder vom Glyphosate-Typ, S-(N-Aryl-N-alkylcarbamoylmethyl)-dithiophosphorsäureester, sowie Sulfonamide und deren Salze, die nicht unter den Umfang der allgemeinen Formel (I) (Komponente a) fallen, wie Vertreter aus der Gruppe der Phenylsulfonylharnstoffe, wie lodosulfuron-methyl und dessen Natriumsalz (lodosulfuron-methyl-natrium) und Mesosulfuron-methyl und dessen Natriumsalz, sowie Vertreter aus der Gruppe der sonstigen Sulfonamide, wie Amidosulfuron und dessen Natriumsalz (Amidosulfuron-methyl-natrium).

13. Feste, wasserdispergierbare Formulierung gemäß einem oder mehreren der Ansprüche 1 bis 12, zusätzlich enthaltend als Komponente (g) ein oder mehrere von der Komponente (e) verschiedene Hilfs- und Zusatzstoffe aus der Gruppe der Desintegrationsmittel, wie quervernetzte Polyvinylpyrrolidone, Bindemittel (Haftvermittler), wie Polyvinylpyrrolidon-Typen, und Mittel zum Einstellen des pH-Werts, wie NaOH und Na₂CO.

14. Verfahren zur Herstellung einer festen, wasserdispergierbaren Formulierung gemäß einem oder mehreren der Ansprüche 1 bis 13, wobei die einzelnen Komponenten in den jeweiligen herstellungsbedingten Mengenverhältnissen zusammengebracht werden.

15. Verfahren zur Bekämpfung von Schadpflanzen, worin eine wirksame Menge einer festen, wasserdispergierbaren Formulierung gemäß einem oder mehreren der Ansprüche 1 bis 13 auf die Schadpflanzen, Teile der Pflanzen, Pflanzensamen, die Fläche auf der Pflanzen wachsen appliziert wird.

16. Verwendung einer festen, wasserdispergierbaren Formulierung gemäß einem oder mehreren der Ansprüche 1 bis 13, zur Bekämpfung von Schadpflanzen.

17. Verwendung einer festen, wasserdispergierbaren Formulierung gemäß einem oder mehreren der Ansprüche 1 bis 13, zur Herstellung eines herbiziden Mittels.

18. Herbizides Mittel, enthaltend eine feste, wasserdispergierbare Formulierung gemäß einem oder mehreren der Ansprüche 1 bis 13.

19. Verfahren zur Bekämpfung von Schadpflanzen, worin eine wirksame Menge eines herbiziden Mittels gemäß Anspruch 18 auf die Schadpflanzen, Teile der Pflanzen, Pflanzensamen, die Fläche auf der Pflanzen wachsen appliziert wird.

20. Verwendung eines herbiziden Mittels gemäß Anspruch 18, zur Bekämpfung von Schadpflanzen.
